(19) Europäisches Patentamt
European Patent Office
Office européen des brevets

(11) **EP 4 325 812 A1**

(12) **EUROPEAN PATENT APPLICATION**
published in accordance with Art. 153(4) EPC

(43) Date of publication:
**21.02.2024 Bulletin 2024/08**

(21) Application number: **22806757.5**

(22) Date of filing: **10.05.2022**

(51) International Patent Classification (IPC):
**H04L 67/12** (2022.01)      **H04L 69/06** (2022.01)

(52) Cooperative Patent Classification (CPC):
**H04L 9/40; H04L 67/12; H04L 69/06**

(86) International application number:
**PCT/CN2022/092020**

(87) International publication number:
**WO 2022/237794 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.05.2021  CN 202110524375**

(71) Applicant: **Huawei Technologies Co., Ltd.
Longgang
Shenzhen, Guangdong 518129 (CN)**

(72) Inventors:
• **JIANG, Weiyu
  Shenzhen, Guangdong 518129 (CN)**
• **YANG, Fei
  Shenzhen, Guangdong 518129 (CN)**
• **LIU, Bingyang
  Shenzhen, Guangdong 518129 (CN)**
• **ZHANG, Daode
  Shenzhen, Guangdong 518129 (CN)**
• **WANG, Chuang
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PACKET TRANSMISSION METHOD AND APPARATUS**

(57)      Embodiments of this application provide a packet transmission method and apparatus, and relate to the field of communication technologies. When the packet transmission method is applied, a first packet may be determined by using a first device, where packet fields of the first packet include an authentication identifier field, an authentication code field, and at least one candidate authentication field, and the authentication identifier field indicates a field that is in the at least one candidate authentication field and that corresponds to the authentication code field; and then the first packet is sent. Because the packet fields of the first packet in this application carry the authentication identifier field and the authentication code field, a device identity is authenticated by using the authentication identifier field and the authentication code field. During packet transmission, the device identity does not need to be authenticated by using a control plane protocol, and device identity authentication efficiency is high. When device identity authentication efficiency is improved, packet processing efficiency is also correspondingly improved.

FIG. 3

**Description**

**CROSS-REFERENCE TO RELATED APPLICATIONS**

This application claims priority to Chinese Patent Application No. 202110524375.8, filed with the China National Intellectual Property Administration on May 13, 2021 and entitled "PACKET TRANSMISSION METHOD AND APPARATUS", which is incorporated herein by reference in its entirety.

**TECHNICAL FIELD**

Embodiments of this application relate to the field of communication technologies, and in particular, to a packet transmission method and apparatus.

**BACKGROUND**

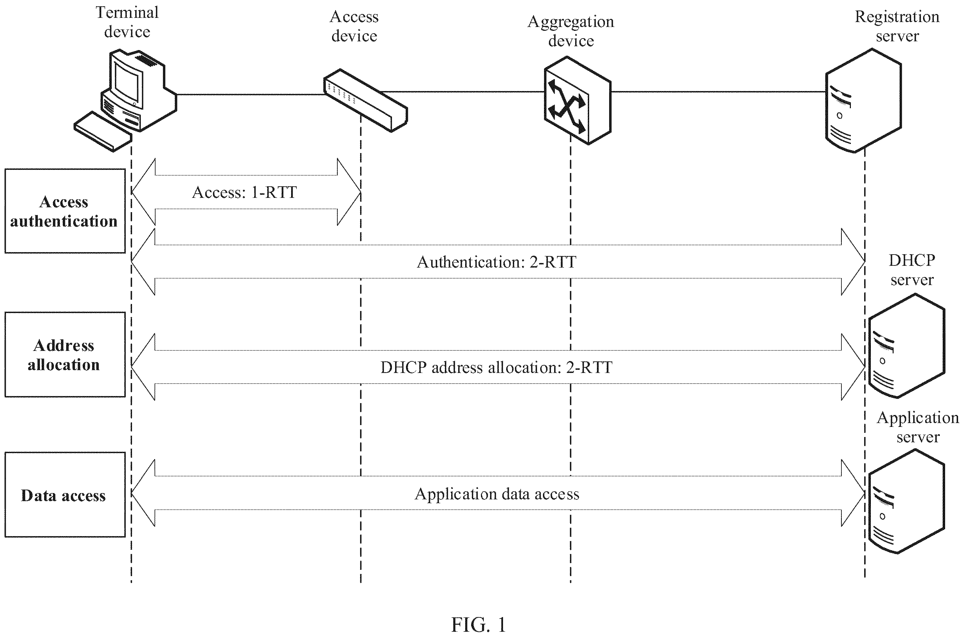

A campus network usually means a school VPN of a university or an intranet of an enterprise. A main feature of the campus network is that a routing structure is completely managed by one organization. When a terminal device accesses the campus network, the terminal device usually needs to perform the following three processes to exchange data, as shown in FIG. 1:

Process 1: Access authentication: Bidirectional authentication is performed between the terminal device and the network. The network verifies whether the terminal device is valid, and the terminal device verifies whether the network is valid. At least three round-trip times (round-trip time, RTT) of communication are used in this process. One RTT is used for establishing communication between the terminal device and an access end device, and at least two RTTs of communication are used for authentication between the terminal device and an authentication server.
Process 2: Address allocation: The terminal device accesses a dynamic host configuration protocol (dynamic host configuration protocol, DHCP) server, and the DHCP server distributes an address to the terminal device. Two RTTs of communication are used in this process.
Process 3: Data access: The terminal communicates with an application server to obtain required application data.

Currently, there are a large quantity of resource-limited (that is, a data operation capability of a device is low) Internet of Things (internet of things, IoT) devices, for example, intelligent water meters and intelligent door locks. In actual application, a resource-limited IoT device needs to send only a small quantity of data packets. However, each time the device sends a data packet, identity authentication needs to be performed by using a control plane protocol (that is, the process 1). This manner needs to be completed by using a plurality of RTTs, signaling resources are wasted, and consequently, packet sending efficiency of the device is low.

**SUMMARY**

This application provides a packet transmission method and apparatus, to improve identity authentication efficiency of a device during packet transmission.
According to a first aspect, this application provides a packet transmission method. The method may be applied to a campus network, or may be applied to another network environment. This is not specifically limited in this application. It is assumed that the method is applied to the campus network, and a first device may be used to perform the solution of this application. The first device may be understood as an Internet of Things device, a terminal device, or the like in the campus network, may be understood as an access network device, or may be understood as an aggregation device. This is not specifically limited in this application. During actual execution, flexible adjustment may be performed with reference to different application scenarios. The following describes the solution of this application by using uplink transmission of a packet as an example. The following first packet is also an uplink packet.
The first device may determine a first packet, where a packet field of the first packet includes an authentication identifier field, an authentication code field, and at least one candidate authentication field, and the authentication identifier field indicates a field that is in the at least one candidate authentication field and that corresponds to the authentication code field; and the first packet is sent.
It should be noted that, the authentication code field is an authentication code field obtained by performing data processing on one or more fields in the candidate authentication field and another field in the first packet. During uplink transmission of a packet, the first packet includes the authentication identifier field and the authentication code field, so that an authentication device authenticates an identity of the device by using the authentication identifier field and the authentication code field. During packet transmission in this application, the device identity does not need to be authenticated by using a control plane protocol, and device identity authentication efficiency is high. When device identity authentication efficiency is improved, packet processing efficiency is also correspondingly improved.

In an optional implementation, different types of first devices correspond to different authentication identifier fields.

It should be noted that, that different types of first devices correspond to different authentication identifier fields may be understood as that authentication identifier fields corresponding to different first devices are different. For example, when the first device is an intelligent door lock and when the first device is an intelligent water meter, the corresponding authentication identifier fields are different. It may also be understood that authentication identifier fields corresponding to a same first device at different times are different. For example, an authentication identifier field of an intelligent door lock 1 in March 2021 is A, and an authentication identifier field of the intelligent door lock 1 in April 2021 is B. It may also be understood that authentication identifier fields corresponding to a same first device at different positions are different. For example, a working campus includes an office area and a living area, an authentication identifier field of a floor-scanning robot A in the office area is C, and an authentication identifier field of the floor-scanning robot A in the living area is D. In addition, another case in which authentication identifier fields corresponding to different types of first devices are different may be further involved. This is not specifically limited in this application.

In this application, different types of first devices correspond to different authentication identifier fields, so that network security can be ensured, and validity of a device identity in a network can be ensured to the greatest extent.

In an optional implementation, the authentication identifier field indicates, by using a preset value, whether a field in the candidate authentication field is used to generate the authentication code field. It should be noted that, because the authentication identifier field may be identified by using the preset value, the authentication identifier field may indicate whether the candidate authentication field participates in calculation of the authentication code field.

In an optional implementation, a plurality of preset values are included, and a value of the preset value is a first value or a second value, where the first value indicates to generate the authentication code field by using the field in the candidate authentication field, and the second value indicates not to generate the authentication code field by using the field in the candidate authentication field.

It should be noted that, the preset value usually includes 1 or 0. 1 (a first preset value) indicates to use the corresponding candidate authentication field to generate the authentication code field, and 0 (a second preset value) indicates not to use the corresponding candidate authentication field to generate the authentication code field. However, in actual application, values of the first preset value and the second preset value are not limited, provided that the two values are different and indicate different meanings.

In an optional implementation, the first packet further includes a sequence number of a terminal device, and the sequence number of the terminal device indicates a sequence of service data of the terminal device.

It should be noted that, the packet may be repeatedly sent. To determine whether the packet is repeatedly transmitted, the sequence number may indicate a transmission sequence of the service data in the packet, to avoid repeated transmission of the service data.

In an optional implementation, a verification node of the sequence number is a first authentication device, a verification node of the authentication code field is a second authentication device, and the first authentication device is different from the second authentication device.

The sequence number and the authentication code field are separately verified by using different devices, so that statelessness of the second authentication device can be ensured, that is, the second authentication device may not need to maintain a state of the terminal device, to improve packet forwarding efficiency of the second device.

In an optional implementation, the first device may be the terminal device or the first authentication device.

The terminal device may be an Internet of Things device, for example, an intelligent door lock or an intelligent water meter. The first authentication device may be a network device that directly communicates with the terminal device, for example, an access network device or an access point (access point, AP).

In an optional implementation, the first device is the terminal device, and the candidate authentication field includes one or more of the following: packet protocol indication information, a configuration information identifier, an identifier (identifier, ID) of a master key, a current value of the sequence number, and the service data of the terminal device, where

the packet protocol indication information indicates a communication protocol used for data exchange between the terminal device and a second device; the configuration information identifier indicates an algorithm used for generating an identity authentication key of the terminal device and an algorithm used for generating the authentication code field; and the ID of the master key is an identifier of a key used for generating the identity authentication key of the terminal device.

It should be noted that, the second device is a device that exchanges data with the terminal device, and may be an application server or another device. This is not specifically limited herein in this application. It is usually assumed that an identity of the second device is trusted, and the identity of the second device does not need to be verified. A communication protocol used for data exchange between the terminal device and the second device may be an associated authentication protocol, or may be another communication protocol. This is not specifically limited in this application. In addition, the identity key of the terminal device is usually generated by an authentication server based on the master key. However, the authentication server may usually support a plurality of different types of master keys, and a master key that is used to generate the identity authentication key of the terminal device needs to be identified by using the ID. In addition, the candidate authentication field includes the configuration identifier information, so that the second authentication device obtains a corresponding authentication identifier field through solving based on an algorithm indicated by the configuration identifier information, and verifies, based on the authentication identifier field obtained through solving, whether the authentication identifier field in the packet is correct.

In an optional implementation, if the first device is the first authentication device, a sequence number window value is set, and a terminal device information table is created. The terminal device information table includes address information of the terminal device and a maximum value of the sequence number of the terminal device. The first authentication device verifies the current value of the sequence number in the packet of the terminal device based on the sequence number window value and the maximum value of the sequence number of the terminal device, to determine whether the service data is repeatedly transmitted.

In this application, the first authentication device verifies the current value of the sequence number by using the sequence number window value and the maximum value of the sequence number in the terminal device information table, to determine whether the service data carried in the packet sent by the terminal device is repeatedly transmitted. In this manner, a replay attack can be prevented.

In an optional implementation, if it is determined, based on the terminal device information table, the sequence number window value, and the current value of the sequence number in the first packet, that the service data in the first packet is repeatedly transmitted, the maximum value of the sequence number of the terminal device in the terminal device information table is sent to the terminal device.

In an optional implementation, if it is determined, based on the terminal device information table, the sequence number window value, and the current value of the sequence number in the first packet, that the service data in the first packet is not repeatedly transmitted, the maximum value of the sequence number of the terminal device in the terminal device information table is updated to the current value of the sequence number.

In an optional implementation, the terminal device information table further includes an ID of the terminal device. If the first device is the first authentication device, the first authentication device receives the packet of the terminal device, where the packet of the terminal device includes a first authentication identifier field; and modifies the first authentication identifier field based on the ID of the terminal device, to obtain the authentication identifier field.

In an optional implementation, the terminal device information table further includes an ID of the terminal device. If the first device is the first authentication device, the first authentication device receives the packet of the terminal device; determines the authentication identifier field based on the candidate authentication field, the address information of the terminal device, the ID of the terminal device, and the address information of the second device, where there is data exchange between the second device and the terminal device; and adds the authentication identifier field to the packet of the terminal device, to obtain the first packet.

In this application, the second authentication device determines a first key based on master key information and the ID that is of the terminal device and that is in the packet, and determines, based on the first key, whether authentication code carried in the packet of the first authentication device is valid, to determine whether the identity ID of the terminal device that sends the packet is valid, thereby verifying the identity of the terminal device. Generation of the first key and verification of the authentication code are completely based on a pure symmetric cryptographic algorithm, thereby greatly improving calculation efficiency of the second authentication device. The second authentication device needs to store only a small amount of master key information, and does not need to store key information of the terminal device, to reduce storage overheads of the second authentication device.

In an optional implementation, the first device is the second authentication device, and the second authentication device may receive the packet from the first authentication device. The packet of the first authentication device includes the ID of the terminal device, an authentication code field, and at least one candidate authentication field. The second authentication device determines the first key based on the master key information and the ID of the terminal device, and verifies validity of the authentication code field based on the first key. The master key information includes the ID of the master key and a value of the master key. The master key information is received by the terminal device from a registration server after the terminal device successfully accesses and registers with the network. If it is determined, based on the first key, that the authentication code field is valid, the packet of the first authentication device is sent to the second device as the first packet.

In an optional implementation, the candidate authentication field includes the packet protocol indication information, the configuration information identifier, the ID of the master key, the current value of the sequence number, and the service data of the terminal device. The second authentication device solves the identity authentication key of the terminal device based on the configuration information identifier and the master key information, and then determines the first authentication identifier field based on the solved identity authentication key of the terminal device and the at least one candidate authentication field; and determines, by comparing the first authentication identifier field with the authentication identifier field in the packet of the first authentication device, whether to send the packet of the first authentication device to the second device.

In an optional implementation, the candidate authentication field includes the packet protocol indication information, the configuration information identifier, the ID of the master key, the current value of the sequence number, and the service data of the terminal device. The second authentication device determines, based on the configuration information identifier in the packet of the first authentication device, that the identity authentication key of the terminal device is generated by using a first algorithm and the authentication code field in the packet of the first authentication device is generated by using a second algorithm; solves the ID of the terminal device and the master key information by using the first algorithm, to determine the identity authentication key of the terminal device; and solves the authentication identifier field of the terminal device and the identity authentication key of the terminal device by using the second algorithm, to obtain the first authentication code field; and if the first authentication code field is consistent with the authentication code field in the packet of the first authentication device, sends the packet of the first authentication device to the second device.

In an optional implementation, after the second authentication device sends the packet of the first authentication device to the second device, the second authentication device may maintain a terminal context table, where the terminal context table includes the ID of the terminal device, the address information of the terminal device, the configuration information identifier, and the ID of the master key.

According to a second aspect, this application provides a packet transmission method. The method may be applied to a terminal device, and is mainly used for uplink transmission of a packet. The terminal device may receive a second packet from a second authentication device, where a packet field of the second packet includes an authentication identifier field, an authentication code field, and at least one candidate authentication field, and the authentication identifier field indicates a field that is in the at least one candidate authentication field and that corresponds to the authentication code field; and the authentication code field of the second packet is verified, where the second packet is a downlink packet.

It should be noted that, the authentication code field is an authentication code field obtained by performing data processing on one or more fields in the candidate authentication field and another field in the first packet. During downlink transmission of a packet, the first packet includes the authentication identifier field and the authentication code field, so that an authentication device authenticates an identity of the device by using the authentication identifier field and the authentication code field. During packet transmission in this application, the device identity does not need to be authenticated by using a control plane protocol, and device identity authentication efficiency is high. When device identity authentication efficiency is improved, packet processing efficiency is also correspondingly improved.

In an optional implementation, the authentication identifier field indicates, by using a preset value, whether a field in the candidate authentication field is used to generate the authentication code field. It should be noted that, because the authentication identifier field may be identified by using the preset value, the authentication identifier field may indicate whether the candidate authentication field participates in calculation of the authentication code field.

In an optional implementation, a plurality of preset values are included, and a value of the preset value is a first value or a second value, where the first value indicates to generate the authentication code field by using the field in the candidate authentication field, and the second value indicates not to generate the authentication code field by using the field in the candidate authentication field.

It should be noted that, the preset value usually includes 1 or 0. 1 (a first preset value) indicates to use the corresponding candidate authentication field to generate the authentication code field, and 0 (a second preset value) indicates not to use the corresponding candidate authentication field to generate the authentication code field. However, in actual application, values of the first preset value and the second preset value are not limited, provided that the two values are different and indicate different meanings.

In an optional implementation, the second packet further includes a sequence number of a second device, the sequence number of the second device indicates a sequence of service data of the second device, and there is data exchange between the second device and the terminal device.

In an optional implementation, the sequence number of the second device is determined by using a timestamp. It should be noted that, the second authentication device has a strong data processing capability, and is provided with a time synchronization module. Therefore, the sequence number of the second device is usually determined based on the timestamp.

In an optional implementation, the candidate authentication field includes one or more of the following: packet protocol indication information, a configuration information identifier, an identifier ID of a master key, a current value of the sequence number, and the service data of the second device, where the packet protocol indication information indicates a communication protocol used for data exchange between the terminal device and the second device; the configuration information identifier indicates an algorithm used for generating an identity authentication key of the terminal device and an algorithm used for generating the authentication code field; and the ID of the master key is an identifier of a key used for generating the identity authentication key of the terminal device.

In an optional implementation, the candidate authentication field includes the packet protocol indication information, the configuration information identifier, the ID of the master key, the current value of the sequence number, and the service data of the terminal device. The terminal device solves the identity authentication key of the terminal device based on the configuration information identifier and master key information, and then determines a second authentication identifier field based on the solved identity authentication key of the terminal device and the at least one candidate authentication field; and determines, by comparing the second authentication identifier field with the authentication identifier field in the packet of the second authentication device, whether to receive the packet of the second authentication device.

In an optional implementation, the terminal device determines, based on the configuration information identifier in the second packet, that the identity authentication key of the terminal device is generated by using a first algorithm and the authentication code field in the second packet is generated by using a second algorithm; determines that the service data carried in the second packet is not repeatedly transmitted if a maximum value of the sequence number of the second device is less than the current value that is of the sequence number of the second device and that is in the second packet; solves the authentication identifier field in the second packet and the identity authentication key of the terminal device by using the second algorithm, to obtain a second authentication code field; and verifies, by using the second authentication code field, whether the authentication code field in the second packet is valid.

In an optional implementation, if it is verified, by using the second authentication code field, that the authentication code field in the second packet is valid, the maximum value of the sequence number of the second device is updated to the current value of the sequence number of the second device.

In an optional implementation, the second packet of the second authentication device is determined by performing data processing on the packet protocol indication information, the configuration information identifier, the authentication identifier field, the ID of the master key, the current value of the sequence number of the second device, and the service data of the second device. There is data exchange between the second device and the terminal device. The packet protocol indication information indicates a communication protocol used for data exchange between the terminal device and the second device. The configuration information identifier indicates an algorithm used for generating an identity authentication key of the terminal device and an algorithm used for generating the authentication code field. The ID of the master key is an identifier of a key used for generating the identity authentication key of the terminal device.

According to a third aspect, this application provides a packet transmission apparatus, including a processing unit and a transceiver unit.

The processing unit is configured to determine a first packet, where a packet field of the first packet includes an authentication identifier field, an authentication code field, and at least one candidate authentication field, and the authentication identifier field indicates a field that is in the at least one candidate authentication field and that corresponds to the authentication code field. The transceiver unit is configured to send the first packet.

In an optional implementation, different types of packet transmission apparatuses correspond to different authentication identifier fields.

In an optional implementation, the authentication identifier field indicates, by using a preset value, whether a field in the candidate authentication field is used to generate the authentication code field.

In an optional implementation, a plurality of preset values are included, and a value of the preset value is a first value or a second value, where the first value indicates to generate the authentication code field by using the field in the candidate authentication field, and the second value indicates not to generate the authentication code field by using the field in the candidate authentication field.

In an optional implementation, the first packet further includes a sequence number of a terminal device, and the sequence number of the terminal device indicates a sequence of service data of the terminal device.

In an optional implementation, a verification node of the sequence number is a first authentication device, a verification node of the authentication code field is a second authentication device, and the first authentication device is different from the second authentication device.

In an optional implementation, the packet transmission apparatus is the terminal device or the first authentication device.

In an optional implementation, the packet transmission apparatus is the terminal device, and the candidate authentication field includes one or more of the following: packet protocol indication information, a configuration information identifier, an identifier ID of a master key, a current value of the sequence number, and the service data of the terminal device, where

the packet protocol indication information indicates a communication protocol used for data exchange between the terminal device and a second device; the configuration information identifier indicates an algorithm used for generating an identity authentication key of the terminal device and an algorithm used for generating the authentication code field; and the ID of the master key is an identifier of a key used for generating the identity authentication key of the terminal device.

In an optional implementation, the first packet is an uplink packet. In an optional implementation, if the packet transmission apparatus is the first authentication device, the processing unit is further configured to: set a sequence number window value, and create a terminal device information table, where the terminal device information table includes address information of the terminal device and a maximum value of the sequence number of the terminal device; and verify the current value of the sequence number in the packet of the terminal device based on the sequence number window value and the maximum value of the sequence number of the terminal device, to determine whether the service data is repeatedly transmitted.

In an optional implementation, the processing unit is further configured to: if it is determined, based on the terminal device information table, the sequence number window value, and the current value of the sequence number in the first packet, that the service data in the first packet is repeatedly transmitted, send the maximum value of the sequence number of the terminal device in the terminal device information table to the terminal device.

In an optional implementation, the processing unit is further configured to: if it is determined, based on the terminal device information table, the sequence number window value, and the current value of the sequence number in the first packet, that the service data in the first packet is not repeatedly transmitted, update the maximum value of the sequence number of the terminal device in the terminal device information table to the current value of the sequence number.

In an optional implementation, the terminal device information table further includes an ID of the terminal device. If the packet transmission apparatus is the first authentication device, the processing unit is further configured to: receive the packet of the terminal device, where the packet of the terminal device includes a first authentication identifier field; and modify the first authentication identifier field based on the ID of the terminal device, to obtain the authentication identifier field.

In an optional implementation, the terminal device information table further includes an ID of the terminal device. If the packet transmission apparatus is the first authentication device, the processing unit is further configured to: receive the packet of the terminal device; determine the authentication identifier field based on the candidate authentication field, the address information of the terminal device, the ID of the terminal device, and the address information of the second device, where there is data exchange between the second device and the terminal device; and add the authentication identifier field to the packet of the terminal device, to obtain the first packet.

In an optional implementation, if the packet transmission apparatus is the second authentication device, the transceiver unit is further configured to receive the packet from the first authentication device. The packet of the first authentication device includes the ID of the terminal device, an authentication code field, and at least one candidate authentication field. The processing unit is further configured to: determine the first key based on the master key information and the ID of the terminal device, and verify validity of the authentication code field based on the first key, where the master key information includes the ID of the master key and a value of the master key, and the master key information is received by the terminal device from a registration server after the terminal device successfully accesses and registers with the network; and if it is determined, based on the first key, that the authentication code field is valid, send the packet of the first authentication device to the second device as the first packet.

In an optional implementation, the candidate authentication field includes the packet protocol indication information, the configuration information identifier, the ID of the master key, the current value of the sequence number, and the service data of the terminal device. The processing unit is further configured to: solve the identity authentication key of the terminal device based on the configuration information identifier and the master key information, and then determine the first authentication identifier field based on the solved identity authentication key of the terminal device and the at least one candidate authentication field; and determine, by comparing the first authentication identifier field with the authentication identifier field in the packet of the first authentication device, whether to send the packet of the first authentication device to the second device.

In an optional implementation, the candidate authentication field includes the packet protocol indication information, the configuration information identifier, the ID of the master key, the current value of the sequence number, and the service data of the terminal device. The processing unit is further configured to: determine, based on the configuration information identifier in the packet of the first authentication device, that the identity authentication key of the terminal device is generated by using a first algorithm and the authentication code field in the packet of the first authentication device is generated by using a second algorithm; solve the ID of the terminal device and the master key information by using the first algorithm, to determine the identity authentication key of the terminal device; and solve the authentication identifier field of the terminal device and the identity authentication key of the terminal device by using the second algorithm, to obtain the first authentication code field; and if the first authentication code field is consistent with the authentication code field in the packet of the first authentication device, send the packet of the first authentication device to the second device.

In an optional implementation, the processing unit is further configured to maintain a terminal context table, where the terminal context table includes the ID of the terminal device, the address information of the terminal device, the configuration information identifier, and the ID of the master key.

According to a fourth aspect, this application provides a packet transmission apparatus, including a transceiver unit and a processing unit.

The transceiver unit is configured to receive a second packet from a second authentication device, where a packet field of the second packet includes an authentication identifier field, an authentication code field, and at least one candidate authentication field, and the authentication identifier field indicates a field that is in the at least one candidate authentication field and that corresponds to the authentication code field; and the processing unit is configured to verify the authentication code field of the second packet.

In an optional implementation, the authentication identifier field indicates, by using a preset value, whether a field in the candidate authentication field is used to generate the authentication code field.

In an optional implementation, a plurality of preset values are included, and a value of the preset value is a first value or a second value, where the first value indicates to generate the authentication code field by using the field in the candidate authentication field, and the second value indicates not to generate the authentication code field by using the field in the candidate authentication field.

In an optional implementation, the second packet further includes a sequence number of a second device, the sequence number of the second device indicates a sequence of service data of the second device, and there is data exchange between the second device and the terminal device.

In an optional implementation, the sequence number of the second device is determined by using a timestamp. It should be noted that, the second authentication device has a strong data processing capability, and is provided with a time synchronization module. Therefore, the sequence number of the second device is usually determined based on the timestamp.

In an optional implementation, the candidate authentication field includes one or more of the following: packet protocol indication information, a configuration information identifier, an identifier ID of a master key, a current value of the sequence number, and the service data of the second device, where the packet protocol indication information indicates a communication protocol used for data exchange between the terminal device and the second device; the configuration information identifier indicates an algorithm used for generating an identity authentication key of the terminal device and an algorithm used for generating the authentication code field; and the ID of the master key is an identifier of a key used for generating the identity authentication key of the terminal device.

In an optional implementation, the candidate authentication field includes the packet protocol indication information, the configuration information identifier, the ID of the master key, the current value of the sequence number, and the service data of the terminal device. The processing unit is further configured to: solve the identity authentication key of the terminal device based on the configuration information identifier and the master key information, and then determine the second authentication identifier field based on the solved identity authentication key of the terminal device and the at least one candidate authentication field; and determine, by comparing the second authentication identifier field with the authentication identifier field in the packet of the second authentication device, whether to receive the packet of the second authentication device.

In an optional implementation, the processing unit is further configured to: determine, based on the configuration information identifier in the second packet, that the identity authentication key of the terminal device is generated by using a first algorithm and the authentication code field in the second packet is generated by using a second algorithm; determine that the service data carried in the second packet is not repeatedly transmitted if a maximum value of the sequence number of the second device is less than the current value that is of the sequence number of the second device and that is in the second packet; solve the authentication identifier field in the second packet and the identity authentication key of the terminal device by using the second algorithm, to obtain a second authentication code field; and verify, by using the second authentication code field, whether the authentication code field in the second packet is valid.

In an optional implementation, the processing unit is further configured to: if it is verified, by using the second authentication code field, that the authentication code field in the second packet is valid, update the maximum value of the sequence number of the second device to the current value of the sequence number of the second device.

In an optional implementation, the second packet of the second authentication device is determined by performing data processing on the packet protocol indication information, the configuration information identifier, the authentication identifier field, the ID of the master key, the current value of the sequence number of the second device, and the service data of the second device. There is data exchange between the second device and the terminal device. The packet protocol indication information indicates a communication protocol used for data exchange between the terminal device and the second device. The configuration information identifier indicates an algorithm used for generating an identity authentication key of the terminal device and an algorithm used for generating the authentication code field. The ID of the master key is an identifier of a key used for generating the identity authentication key of the terminal device.

According to a fifth aspect, this application provides a communication apparatus, including a processor and a memory. The memory is configured to store a computer program. When the apparatus runs, the processor executes the computer program or instruction stored in the memory, so that the communication apparatus performs the method according to the first aspect or the embodiments of the first aspect or the method according to the second aspect or the embodiments of the second aspect.

According to a sixth aspect, this application further provides a computer-readable storage medium, where the computer-readable storage medium stores computer-readable instructions, and when the computer-readable instructions are run on a computer, the computer is enabled to perform the method according to the first aspect or any one of the possible designs of the first aspect or the method according to the second aspect or any one of the possible designs of the second aspect.

According to a seventh aspect, this application provides a computer program product including an instruction. When the computer program product is run on a computer, the computer is enabled to perform the method according to the first aspect or the embodiments of the first aspect or the method according to the second aspect or the embodiments of the second aspect.

According to an eighth aspect, this application provides a chip system. The chip system includes a processor, and may further include a memory, and is configured to implement the method according to the first aspect or any one of the possible designs of the first aspect or the method according to the second aspect or the embodiments of the second aspect. The chip system may include a chip, or may include a chip and another discrete component.

According to a ninth aspect, this application provides a communication system, where the system includes a terminal device, a first authentication device, a second authentication device, and a second device. The communication system is configured to perform the method according to the first aspect or any one of the possible designs of the first aspect or the method according to the second aspect or any one of the possible designs of the second aspect.

For technical effects that can be achieved in the second aspect to the ninth aspect, refer to technical effects that can be achieved in the corresponding possible design solutions in the first aspect or the second aspect. Details are not described herein again in this application.

## BRIEF DESCRIPTION OF DRAWINGS

FIG. 1 is a schematic diagram of a packet transmission procedure;
FIG. 2 is a schematic diagram of an architecture of a communication system according to an embodiment of this application;
FIG. 3 is a schematic flowchart of a packet transmission method according to an embodiment of this application;
FIG. 4 is a schematic flowchart of device registration according to an embodiment of this application;
FIG. 5 is a schematic flowchart of a packet transmission method according to an embodiment of this application;
FIG. 6 is a schematic flowchart of a packet transmission method according to an embodiment of this application;
FIG. 7 is a schematic flowchart of a packet transmission method according to an embodiment of this application;
FIG. 8 is a schematic flowchart of a packet transmission method according to an embodiment of this application;
FIG. 9 is a schematic diagram of a structure of a packet transmission apparatus according to an embodiment of this application;
FIG. 10 is a schematic diagram of a structure of a packet transmission apparatus according to an embodiment of this application; and
FIG. 11 is a schematic diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

A packet transmission method in this application may be applied to a communication scenario of a campus network, for example, an enterprise network or a school VPN or an industrial Internet. Specifically, for example, an intelligent water meter accesses an industrial Internet represented by a large water plant, and an intelligent door lock accesses an enterprise network represented by a large hotel. This application may also be applied to a non-campus network, and the campus network usually means a school VPN of a university or an intranet of an enterprise. Routing devices in the campus network are usually managed and controlled by using a same service center. Generally, the campus network includes an IoT device, an access device, an aggregation device, a core device, and the like.

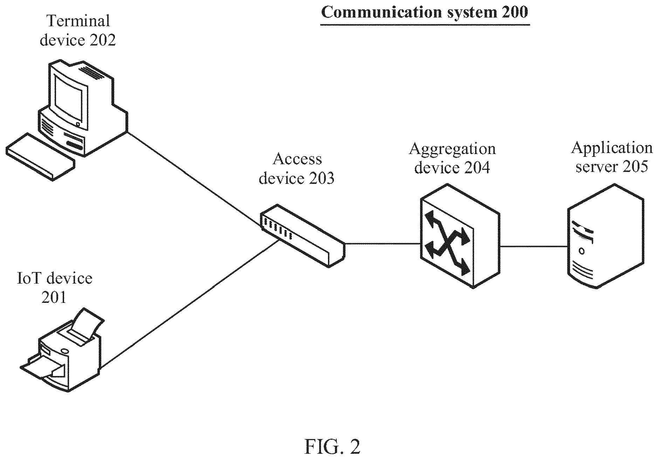

FIG. 2 is a schematic diagram of an architecture of a communication system according to this application. The communication system 200 includes an IoT device 201, a terminal device 202, an access device 203, an aggregation device 204, and an application server 205. FIG. 2 is merely an example for description. In actual application, the communication system may further include other network elements, such as a registration server, an address allocation server, and a core device. The network elements are not shown one by one herein in this application.

A terminal device in embodiments of this application, which may also be referred to as a terminal, is an entity configured to receive or transmit a signal on a user side, and is configured to send an uplink signal to a network device or receive a downlink signal from the network device. The terminal device includes a device that provides a user with voice and/or data connectivity, for example, may include a handheld device having a wireless connection function or a processing device connected to a wireless modem. The terminal device may communicate with a core network by using a radio access network (radio access network, RAN), and exchange voice and/or data with the RAN. The terminal device may include user equipment (user equipment, UE), a V2X terminal device, a wireless terminal device, a mobile terminal device, a device-to-device (device-to-device, D2D) communication terminal device, a machine-to-machine/machine-type communications (machine-to-machine/machine-type communications, M2M/MTC) terminal device, an IoT device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), a wearable device, an in-vehicle device, or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board unit, OBU).

The IoT device 201 and the terminal device 202 may send a packet to the access device 203, the access device 203 may forward the packet to the aggregation device 204, and then the aggregation device 204 may send the packet to the application server 205. Packet transmission may be implemented in this manner. However, during packet transmission, to ensure security of the IoT device or the terminal device, an identity of the IoT device or the terminal device usually needs to be verified. As shown in the background, identity authentication of the IoT device and the terminal device is usually performed by using an access end (that is, an access device). However, the identity of the access end (for example, in an uncontrollable environment in which an access end device is deployed on a corridor or a street lamp pole, it is difficult to ensure that the access end device is trusted in these scenarios) may be unreliable. Therefore, an identity verification result of the IoT device and the terminal device is untrusted. In addition, based on the description in the background, it can be learned that identity verification of the IoT device and the terminal device needs to be completed by using a plurality of RTTs, identity authentication efficiency is low, and network access efficiency is low when identity authentication efficiency is low. In addition, after authentication, the access end device needs to store security context (including a negotiated session key), needs to maintain the security context by using periodic heartbeat signaling, and also needs to periodically update the session key on the access end. When the access end device has no context, security context needs to be established or recovered by using signaling before a packet is sent. For a restricted IoT device that sends only a small quantity of data packets, signaling overheads of this communication mechanism are excessively high. The reason is that negotiation of the security key required by a data plane depends excessively on control plane signaling, resulting in low device identity authentication efficiency and low network access efficiency.

In consideration of the foregoing case, in this application, to improve efficiency of device identity authentication and reduce dependency on the control plane signaling during identity authentication, an authentication identifier field and an authentication code field are introduced. Reliability of authentication code is determined by solving the authentication identifier field. In this manner, interaction of control plane signaling is reduced, identity verification efficiency is high, and network access efficiency is improved when identity authentication efficiency is high.

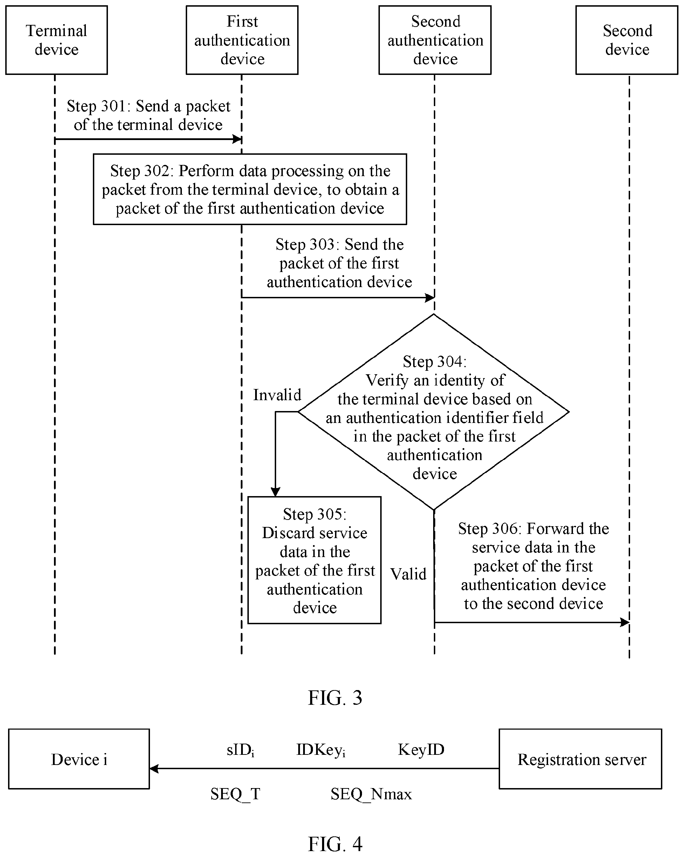

The following describes a packet transmission method in this application by using FIG. 3. Packet transmission needs to be implemented through interaction between a plurality of communication devices. In FIG. 3, an example in which the communication devices are a terminal device, a first authentication device, a second authentication device, and a second device is used to describe an uplink packet transmission solution in this application. The first authentication device may be an access device, for example, an access network device or an AP device. The second device may be an aggregation device or the like. The second device may be an application server or the like. This is not specifically limited herein in this application. Generally, a data processing capability of the second authentication device is higher than that of the first authentication device. Specific execution is as follows:

Step 301: The terminal device sends a packet of the terminal device to the first authentication device, where the packet includes an authentication code field and at least one candidate authentication field, and the packet may further carry an authentication identifier field or may not carry the authentication identifier field, and this may be flexibly determined based on an actual service condition. If the packet of the terminal device includes the authentication identifier field, the authentication field may indicate a field that is in the at least one candidate authentication field and that corresponds to the authentication code field.

Step 302: The first authentication device performs data processing on the packet from the terminal device, to obtain a packet of the first authentication device. After the first authentication device receives the packet from the terminal device, if it is detected that the packet of the terminal device does not include the authentication identifier field, the first authentication device may add the authentication identifier field; or if it is detected that the packet of the terminal device includes the authentication identifier field, the first authentication device may modify the authentication identifier field.

Step 303: The first authentication device sends the packet of the first authentication device to the second authentication device.

Correspondingly, the second authentication device receives the packet from the first authentication device.

Step 304: The second authentication device verifies an identity of the terminal device based on the authentication identifier field in the packet of the first authentication device. If the identity of the terminal device is valid, step 305 is performed; or if the identity of the terminal device is invalid, step 306 is performed.

Step 305: The second authentication device discards service data in the packet of the first authentication device.

Step 306: The second authentication device forwards the service data in the packet of the first authentication device to the second device.

Regardless of the terminal device, the first authentication device, and the second authentication device, only a device that sends a packet including the authentication identifier field may be considered as a first device, and the sent packet may be considered as the first packet. During uplink transmission of a packet, the first packet includes the authentication identifier field and the authentication code field, so that an authentication device authenticates an identity of the device by using the authentication identifier field and the authentication code field. During packet transmission in this application, the device identity does not need to be authenticated by using a control plane protocol, and device identity authentication efficiency is high. When device identity authentication efficiency is improved, packet processing efficiency is also correspondingly improved.

For example, different types of first devices correspond to different authentication identifier fields. That different types of first devices correspond to different authentication identifier fields may be understood as that authentication identifier fields corresponding to different first devices are different. For example, when the first device is an intelligent door lock and when the first device is an intelligent water meter, the corresponding authentication identifier fields are different. It may also be understood that authentication identifier fields corresponding to a same first device at different times are different. For example, an authentication identifier field of an intelligent door lock 1 in March 2021 is A, and an authentication identifier field of the intelligent door lock 1 in April 2021 is B. It may also be understood that authentication identifier fields corresponding to a same first device at different positions are different. For example, a working campus includes an office area and a living area, an authentication identifier field of a floor-scanning robot A in the office area is C, and an authentication identifier field of the floor-scanning robot A in the living area is D. When the first device is the terminal device and when the first device is the first authentication device, the corresponding authentication identifier fields are different. In addition, another case in which authentication identifier fields corresponding to different types of first devices are different may be further involved. This is not specifically limited in this application. In this application, different types of first devices correspond to different authentication identifier fields, so that network security can be ensured, and validity of a device identity in a network can be ensured to the greatest extent.

For example, the authentication identifier field indicates, by using a preset value, whether a field in the candidate authentication field is used to generate the authentication code field. A plurality of preset values are included, and a value of the preset value is a first value or a second value, where the first value indicates to generate the authentication code field by using the field in the candidate authentication field, and the second value indicates not to generate the authentication code field by using the field in the candidate authentication field.

It should be noted that, the preset value usually includes 1 or 0. 1 (a first preset value) indicates to use the corresponding candidate authentication field to generate the authentication code field, and 0 (a second preset value) indicates not to use the corresponding candidate authentication field to generate the authentication code field. However, in actual application, values of the first preset value and the second preset value are not limited, provided that the two values are different and indicate different meanings. For example, the first preset value is X, and the second preset value is Y Certainly, the preset value is 1 or 0, and is a binary number. This is convenient for device identification and can be used to perform device identity authentication more quickly. For example, if the candidate authentication field includes a packet field 1, a packet field 2, a packet field 3, a packet field 4, and a packet field 5, and the authentication identifier field is "10101", the packet field 1, the packet field 3, and the packet field 5 may be used to generate the authentication code field, and the packet field 2 and the packet field 4 cannot be used to generate the authentication code field. For details, refer to Table 1.

**Table 1**

| Candidate authentication field | Preset value | Whether used to generate the authentication code field |
|---|---|---|
| Packet field 1 | 1 | Yes |
| Packet field 2 | 0 | No |
| Packet field 3 | 1 | Yes |
| Packet field 4 | 0 | No |
| Packet field 5 | 1 | Yes |
| ... | ... | ... |

In addition, whether the field in the candidate authentication field is used to generate the authentication code field may also be indicated in another manner. For example, the preset value is two bits, and the two bits are used to jointly indicate whether the field in the corresponding candidate packet field is used to generate the authentication code field. For example, the candidate authentication field includes: a packet field 1, a packet field 2, a packet field 3, and a packet field 4. 00 indicates that the packet field 1 and the packet field 2 are used to generate the authentication code field; 01 indicates that the packet field 1 is used to generate the authentication code field, and the packet field 2 is not used to generate the authentication code field; 10 indicates that the packet field 1 is not used to generate the authentication code field, and the packet field 2 is used to generate the authentication code field; and 11 indicates that neither the packet field 1 nor the packet field 2 is used to generate the authentication code field. For details, refer to Table 2, and details are not shown one by one herein.

**Table 2**

| Candidate authentication field | Preset value | Whether used to generate the authentication code field | |
|---|---|---|---|
| Packet field 1 and packet field 2 | 00 | Yes | Yes |
| | 01 | Yes | No |
| | 10 | No | Yes |
| | 11 | No | No |
| Packet field 3 and packet field 4 | 00 | Yes | Yes |
| | 01 | Yes | No |
| | 10 | No | Yes |
| | 11 | No | No |
| ... | ... | ... | ... |

In addition, in this application, more bits may indicate whether to generate the authentication code field by using the field in the candidate authentication field. For example, three bits are used to jointly indicate whether three candidate authentication fields are used to generate the authentication code field. Details are not shown one by one herein in this application. The following uses only an example in which the preset value is the first value or the second value, that is, 0 or 1 for illustration.

It should be further noted that, the first packet in this application may further include a sequence number of the terminal device; and the sequence number of the terminal device indicates a sequence of service data of the terminal device. The service data of the terminal device may be repeatedly sent, and a transmission sequence of the service data of the terminal device is indicated by using the sequence number, to avoid repeated transmission of the service data of the terminal device.

In addition, before the packet transmission method of this application is performed, the terminal device needs to send a registration request to a registration server, and request for an ID and an identity authentication key of the terminal device. The registration process is usually performed only once. After the registration server receives the registration request of the terminal device, the registration device distributes the ID and the identity authentication key IDKey of the terminal device to the terminal device. IDKey is generated by the registration server by using a first algorithm, for example, a KDF algorithm, by using a master key MasterKey and the ID of the terminal device, that is, sID, where IDKey=KDF(MasterKey, sID). Because a plurality of registration servers may be included, an ID of the registration server may be used to distinguish which registration server generates IDKey. In addition, each registration server may support a plurality of master keys, and needs to identify the key by using an ID of the master key. Therefore, the registration server further maintains master key information. The master key information includes: the ID of the master key (that is, KeyID) and a value of the master key (that is, MasterKey), for example, {KeyID, MasterKey}. As shown in FIG. 4, after a device i sends a registration request to the registration service when accessing a network, the registration server may distribute an ID of the device i, that is, sIDi, an identity authentication key $IDKey_i$ of the device i, and the ID of the master key, that is, KeyID, to the device i. In addition, the registration server may further set an initial value SEQ_T of a sequence number of the device i and a maximum value SEQ_Nmax of a sequence number of a peer device (the application server or the second device) that communicates with the device i to 0, that is, send SEQ_Nmax to the device i. Because the first authentication device forwards communication between the terminal device and the registration server, the registration server may attach SEQ_T to the first authentication device when sending a registration response message to the terminal device, so that the first authentication device sets SEQ_T_max=SEQ_T. In addition, the first authentication device sets a sequence number window value SEQ_WINDOW_SIZE of the terminal device.

Before the terminal device is registered or after the terminal device is registered, the registration server pushes the master key information {KeyID, MasterKey} to the second authentication device. The second authentication device may obtain the master key information {KeyID, MasterKey}. In addition, the second authentication device maintains a terminal context table for associated authentication. The terminal context table includes the ID of the terminal device, the address information of the terminal device, the configuration information identifier, and the ID of the master key. A storage format of the terminal context table may be {sID, sLoc, KeyID, ProfileID}, where sLoc indicates the address information of the terminal device, and ProfileID indicates the configuration information identifier. When the terminal device initially accesses the network, the terminal context table is empty.

Before the terminal device sends the service data, the terminal device may communicate with a DHCP server to obtain the IP address sLoc, and may communicate with a DNS server to obtain an IP address dLoc of the peer device (the application server or the second device). In addition, when the DHCP server distributes the IP address to the terminal device, the first authentication device may obtain the IP address and sID of the terminal device, and the first authentication device may create a terminal information table. The terminal device information table may include the ID of the terminal device, the address information of the terminal device, and the maximum value of the sequence number of the terminal device, and a storage format of the terminal device information table may be {sID, sLoc, SEQ_T_max}.

In other words, before the terminal device sends a packet, the terminal device has the IP address sLoc, the identity sID, the identity key sIDKey, the sequence number SEQ_T (the initial value is SEQ_T_max), the ID of the master key, that is, KeyID, and the maximum value SEQ_Nmax (the initial value is 0) of the sequence number of the peer end. The first authentication device has the window value SEQ_WINDOW_SIZE of the sequence number, and maintains the terminal device information table {sID, sLoc, SEQ_T_max}. The second authentication device maintains the master key information {KeyID, MasterKey} and the terminal context table.

For example, the candidate authentication field in step 301 usually includes one or more of the following packet fields: packet protocol indication information ServiceID, the configuration information identifier ProfileID, the ID of the master key, that is KeyID, the current value SEQ_T_current of the sequence number of the terminal device, and the service data Data of the terminal device, where the packet protocol indication information indicates a communication protocol used for data exchange between the terminal device and the second device (that is, the peer device); the configuration information identifier indicates an algorithm used for generating an identity authentication key of the terminal device and an algorithm used for generating the authentication code field; and the ID of the master key is an identifier of a key used for generating the identity authentication key of the terminal device. The terminal device may generate the authentication code field based on a second algorithm with reference to the candidate packet field and another packet field. The second algorithm may be a MAC algorithm or another algorithm. This is not specifically limited herein in this application. It is assumed that AuthFlag is the authentication identifier field in a format of a binary character string. It indicates whether packet fields starting from the AuthFlag field is used for calculating the authentication identifier field AuthCode. "1" indicates that the field is used for calculating AuthCode, and "0" indicates that the field is not used for calculating AuthCode. For example, the packet of the terminal device sequentially includes the following packet fields: sLoc, dLoc, ServiceID, ProfileID, AuthFlag, KeyID, SEQ_T_current, AuthCode, and Data. In this case, AuthFlag="0B01101U", indicating that three fields: KeyID, SEQ_T_current, and Data need to participate in calculation of AuthCode, and the fields AuthFlag and AuthCode do not need to participate in calculation of AuthCode. In addition, the source address sLoc and the destination address dloc are mandatory packet fields for calculating AuthCode.

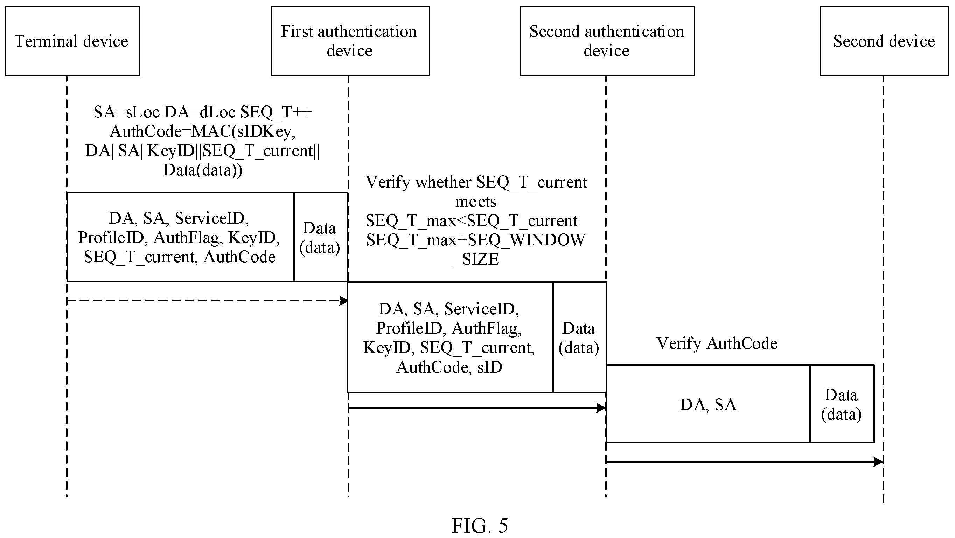

FIG. 5 is a schematic diagram of an uplink packet data transmission procedure. In the figure, the terminal device needs to determine the address information sLoc of the terminal device, the address information dLoc of the peer end, and the current value SEQ_T_current of the sequence number of the terminal device. If the terminal device sends a packet for the first time after successful registration, SEQ_T_current may be SEQ_T++, that is, if SEQ_T sent by the registration server to the terminal device is 1, SEQ_T++ is 2 (1+1=2). In addition, the terminal device further needs to calculate the authentication code field by using the second algorithm with reference to the authentication identifier field AuthFlag, for example, determine the authentication code field AuthCode=MAC(sIDKey, DA‖SA‖KeyID‖SEQ_T_current‖Data) by using the MAC algorithm. The terminal device further needs to determine the ID of the master key, that is, KeyID, so that the second authentication device can calculate the authentication code by verifying the authentication code field. In addition, in the packet of the terminal device, ServiceID (the following uses an example in which ServiceID=0x03 represents an associated authentication packet) and ProfileID need to be added, where ProfileID=0 is a default value, indicating that key derivation is performed by using HKDF-HMAC-SHA256, that is, the identity authentication key of the terminal device is generated, and HMAC-SHA256 is used for integrity protection, that is, the authentication identifier field is generated. The packet sent by the terminal device includes DA, that is, the address information of the peer device, SA, that is, the address information of the terminal device, ServiceID, ProfileID, AuthFlag, KeyID, SEQ_T_current, AuthCode, and Data. A packet format may be shown in Table 3. 0 to 31 indicate 32 bits.

**Table 3**

| 0 1 2 3 4 5 6 7     8 9 10 11 12 13 14 15 | 16 17 18 19 20 21 22 23 | 24 25 26 27 28 29 30 31 | |
|---|---|---|---|
| Type=Destination IP | Len | DA | |
| Type=Source IP | Len | SA | |
| Type=ServiceID | Len | ServiceID=0x03 | Type=ProfileID |
| Len | ProfileID=0 | Type=AuthFlag | Len |
| AuthFlag=0B01101U | Type=KeyID | Len | KeyID |
| Type=SEQ_T_current | Len | SEQ_T_current | |
| Type=AuthCode | Len=0x08 | | |
| AuthCode | | | |
| | | Total Length | Padding |
| Data | | | |

In an optional implementation, if the packet sent by the terminal device to the first authentication device does not include the authentication identifier field, the first authentication device may determine the authentication identifier field based on the candidate authentication field, the address information of the terminal device, and the address information of the second device, and add the authentication identifier field to the packet of the terminal device, so that the second authentication device can verify the identity of the terminal device based on the authentication identifier field.

The packet sent by the terminal device to the first authentication device includes a first authentication identifier field AuthFlag="0B01101U". The first authentication device may modify the first authentication identifier field based on the ID of the terminal device in the terminal information table, to obtain the authentication identifier field. In the foregoing example, after the first authentication device modifies the first authentication identifier field (that is, the authentication identifier field from the terminal device), the ID of the terminal device is also added to the corresponding packet, and the packet fields of the first authentication device may be adjusted to: sLoc, dLoc, ServiceID, ProfileID, AuthFlag, KeyID, SEQ_T_current, AuthCode, sID, and Data, and AuthFlag is adjusted to "0B011001U".

After receiving the packet from the terminal device, the first authentication device first determines, based on whether ServiceID is equal to 0x03, whether the data packet is an associated identity authentication packet, and if the data packet is not the associated identity authentication packet, does not process the packet. If the packet is the associated identity authentication packet, the current value of the sequence number in the packet of the terminal device is verified based on the sequence number window value and the maximum value of the sequence number of the terminal device, to determine whether the service data is repeatedly transmitted. During specific execution, whether SEQ_T_current meets $SEQ\_T\_max < SEQ\_T\_current \leq SEQ\_T\_max + SEQ\_WINDOW\_SIZE$ may be verified. If it is determined, based on the terminal device information table, the sequence number window value, and the current value of the sequence number in the first packet, that the service data in the first packet is repeatedly transmitted, the maximum value that is of the sequence number of the terminal device and that is in the terminal device information table is sent to the terminal device. Then, the first authentication device sends the packet data to the second authentication device, and a packet format may be shown in Table 4. 0 to 31 indicate 32 bits.

**Table 4**

| 0 1 2 3 4 5 6 7 | 8 9 10 11 12 13 14 15 | 16 17 18 19 20 21 22 23 | 24 25 26 27 28 29 30 31 |
|---|---|---|---|
| Type=Destination IP | Len | DA | |
| Type=Source IP | Len | SA | |
| Type=ServiceID | Len | ServiceID=0x03 | Type=ProfileID |
| Len | ProfileID=0 | Type=AuthFlag | Len |
| AuthFlag=0B011001U | Type=KeyID | Len | KeyID |
| Type=SEQ_T_current | Len | SEQ_T_current | |
| Type=AuthCode | Len=0x08 | | |
| AuthCode | | | |
| Type=ID | Len | sID | |
| Total Length | | | Padding |
| Data | | | |

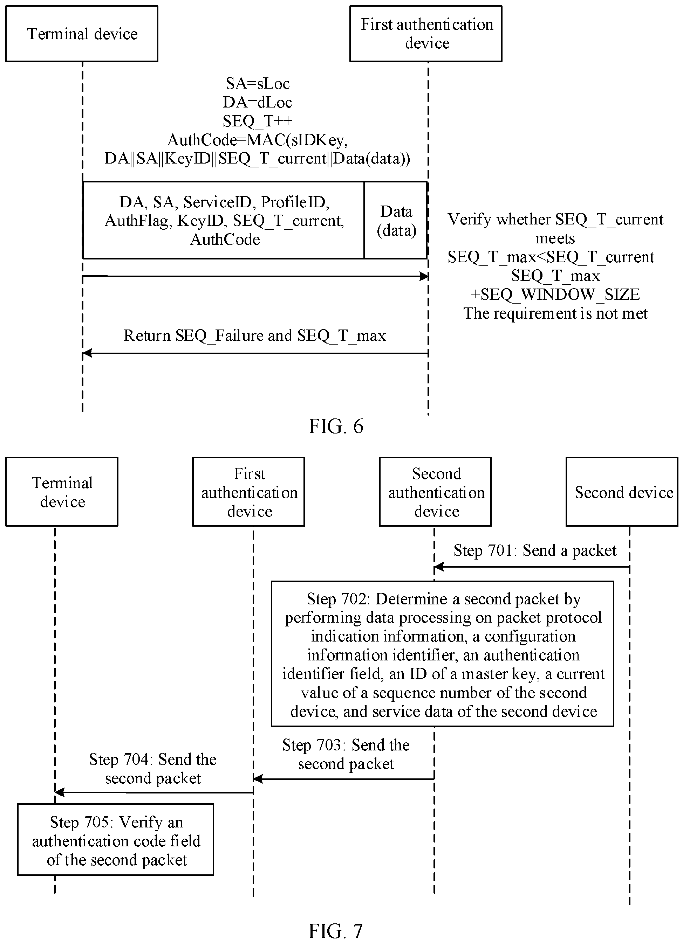

If it is determined, based on the terminal device information table, the sequence number window value, and the current value of the sequence number in the first packet, that the service data in the first packet is not repeatedly transmitted, the maximum value that is of the sequence number of the terminal device and that is in the terminal device information table is updated to the current value SEQ_T_max=SEQ_T_current of the sequence number. As shown in FIG. 6, the first authentication device discards a data packet, and sends an identifier SEQ_Failure=1 (indicating that an error occurs in the SEQ) and SEQ_T_max to the terminal device. The terminal device receives SEQ_Failure=1, and updates SEQ_T=SEQ_Nmax based on the identifier SEQ_Failure=1.

The second authentication device may receive the packet of the first authentication device. The packet of the first authentication device includes the ID of the terminal device and the authentication code field. The second authentication device may determine a first key based on the master key information and the ID of the terminal device, and verify validity of the authentication code field based on the first key. If it is determined, based on the first key, that the authentication code field is valid, the packet of the first authentication device is sent to the second device.

When receiving the packet of the first authentication device, the second authentication device may determine, based on whether ServiceID is equal to 0x03, whether the data packet is the associated identity authentication packet, and if the data packet is not the associated identity authentication packet, does not process the packet. If the packet is the associated identity authentication packet, the following steps are performed:

(1) Read KeyID in the packet, and find, based on KeyID and the master key information in the packet, the value MasterKey of the corresponding master key.
(2) Read ProfileID in the packet, and determine, based on the configuration information identifier in the packet of the first authentication device, that the identity authentication key of the terminal device is generated by using the first algorithm and the authentication code field in the packet of the first authentication device is generated by using the second algorithm. That is, the used cryptographic algorithm, including a key derivation function and an algorithm that is used for generating the authentication code field, is determined based on ProfileID. For example, when ProfileID=0, the key derivation function is KDF=HKDF-HMAC-SHA256 and the algorithm that is used for generating the authentication code field is MAC=HMAC-SHA256.
(3) Solve the ID of the terminal device and the master key information by using the first algorithm, to determine the identity authentication key of the terminal device. In other words, the identity authentication key sIDKey of the terminal device is calculated based on sID and the master key MasterKey in the packet, and the calculation is as follows: sIDKey=KDF(MasterKey, sID).
(4) Solve the authentication identifier field of the terminal device and the identity authentication key of the terminal device by using the second algorithm, to obtain the first authentication code field. To be specific, the first authentication code field is calculated based on AuthFlag in the packet of the first authentication device by using sIDKey solved in step (3):

$$AuthCode'=MAC(sIDKey, DA\|SA\|KeyID\|SEQ\_T\_current\|Data)$$

The second authentication device may check whether AuthCode'==AuthCode is valid. If AuthCode'==AuthCode is invalid, it is considered that AuthCode is invalid and the data packet is discarded. Otherwise, it is considered that AuthCode is valid, it is determined that the first authentication code field is consistent with the authentication code field in the packet of the first authentication device, and the packet of the first authentication device is sent to the second device. The second authentication device may delete information related to AuthCode, that is, ServiceID, ProfileID, AuthFlag, KeyID, SEQ_T_current, AuthCode, and sID, and forward the packet. In addition, if {sID, sLoc, KeyID, ProfileID} is not in the terminal context table when AuthCode is valid, {sID, sLoc, KeyID, ProfileID} may be added to the terminal context table.

In this application, during uplink packet transmission, the sequence number of the terminal device and the authentication code field are verified by using different authentication devices. To be specific, a verification node of the sequence number is the first authentication device, and a verification node of the authentication code field is the second authentication device. The sequence number and the authentication code field are separately verified by using different devices, so that statelessness of the second authentication device can be ensured, that is, the second authentication device may not need to maintain a state of the terminal device, to improve packet forwarding efficiency of the second authentication device.

The following describes a packet transmission method in this application by using FIG. 7. Packet transmission needs to be implemented through interaction between a plurality of communication devices. In FIG. 7, an example in which the communication devices are a terminal device, a first authentication device, a second authentication device, and a second device is used to describe a downlink packet transmission solution in this application. The first authentication device may be an access device, for example, an access network device or an AP device. The second device may be an aggregation device or the like. The second device may be an application server or the like. This is not specifically limited herein in this application. Generally, a data processing capability of the second authentication device is higher than that of the first authentication device. Specific execution is as follows:

Step 701: The second device sends a packet to the second authentication device, where the packet carries a source address SA=dLoc, a destination address DA=sLoc, and Data.

Step 702: The second authentication device determines a second packet by performing data processing on packet protocol indication information, a configuration information identifier, an authentication identifier field, an ID of a master key, a current value of a sequence number of the second device, and service data of the second device, where packet fields of the second packet include an authentication identifier field, an authentication code field, and at least one candidate authentication field, and the authentication identifier field indicates a field that is in the at least one candidate authentication field and that corresponds to the authentication code field.

Step 703: The second authentication device sends the second packet to the first authentication device.

Step 704: The first authentication device forwards the second packet to the terminal device.

Step 705: The terminal device verifies the authentication code field of the second packet.

During packet transmission in this application, the device identity does not need to be authenticated by using a control plane protocol, and device identity authentication efficiency is high. When device identity authentication efficiency is improved, packet processing efficiency is also correspondingly improved.

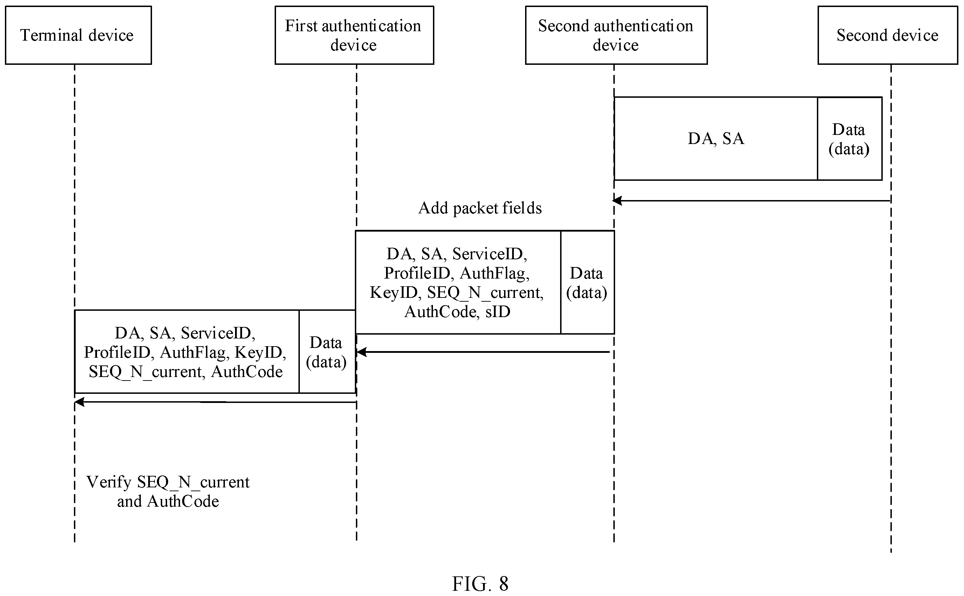

FIG. 8 is a schematic diagram of a downlink packet data transmission procedure. The packet sent by the second device carries a source address SA=dLoc, a destination address DA=sLoc, and Data. The second authentication device may view a terminal context table based on the destination address SA=sLoc. If sLoc does not exist in the terminal context table, it is determined that ServiceID does not need to be added. If sLoc exists in the terminal context table, it may be determined that ServiceID needs to be added, and the ID of the terminal device, the ID of the master key, that is, KeyID, and the configuration information identifier ProfileID are read from the terminal context table. Then, the following operations may be performed:

(1) Read ProfileID in the terminal context table, and determine, based on ProfileID, a used cryptographic algorithm, including a key derivation function and an algorithm that is used for generating the authentication code field. For example, when ProfileID=0, the key derivation function is KDF=HKDF-HMAC-SHA256 and the algorithm that is used for generating the authentication code field is MAC=HMAC-SHA256.

(2) Search for the master key information based on KeyID to obtain the corresponding master key MasterKey.

(3) Calculate sIDKey=KDF(MasterKey, sID) based on the terminal device identity sID and the master key MasterKey.

(4) The sequence number of the second device may be determined by using a timestamp. For example, SEQ_N_current is calculated based on a local timestamp of the second authentication device. For example, SEQ_N represents a quantity of milliseconds from 00:00:00:00 of the year 2000 to a current time.

(5) Calculate the authentication code field AuthCode=MAC(sIDKey, DA∥SA∥KeyID∥SEQ_N∥Data), where Auth-Flag="0B01101U".

(6) Add packet fields such as ServiceID, ProfileID, AuthFlag, KeyID, SEQ N current, and AuthCode to the packet of the second device.

The second authentication device sends the second packet to the first authentication device, where packet fields of the second packet include DA, SA, ServiceID, ProfileID, AuthFlag, KeyID, SEQ_N, and AuthCode, and a data field of the data packet is Data. Then, the first authentication device sends the packet data to the second authentication device, and a packet format may be shown in Table 5. 0 to 31 indicate 32 bits.

**Table 5**

| 0 1 2 3 4 5 6 7 | 8 9 10 11 12 13 14 15 | 16 17 18 19 20 21 22 23 | 24 25 26 27 28 29 30 31 |
|---|---|---|---|
| Type=Destination IP | Len | DA | |
| Type=Source IP | Len | SA | |
| Type=ServiceID | Len | ServiceID=0x03 | Type=ProfileID |
| Len | ProfileID=0 | Type=AuthFlag | Len |
| AuthFlag=0B011001U | Type=KeyID | Len | KeyID |
| Type=SEQ_N_current | Len | SEQ N current | |
| Type=AuthCode | Len=0x08 | | |
| AuthCode | | | |
| Total Length | | | Padding |
| Data | | | |

After receiving the packet, the first authentication device does not perform data processing on the packet fields, and directly forwards the second packet to the terminal device. After receiving the second packet, if the terminal device determines, based on the packet protocol indication information in the second packet, that the second packet uses an associated identity authentication protocol, that is, ServiceID=0x03, the terminal device performs the following steps:

(1) The terminal device determines, based on the configuration information identifier in the second packet, that the identity authentication key of the terminal device is generated by using a first algorithm and the authentication code field in the second packet is generated by using a second algorithm. To be specific, ProfileID is read, and the used cryptographic algorithm, including a key derivation function and an algorithm that is used for generating the authentication code field, is determined based on ProfileID. For example, when ProfileID=0, the key derivation function is KDF=HKDF-HMAC-SHA256 and the algorithm that is used for generating the authentication code field is MAC=HMAC-SHA256.

(2) If the maximum value of the sequence number of the second device is greater than the current value that is of the sequence number of the second device and that is in the second packet, it is determined that the service data carried in the second packet is not repeatedly transmitted, that is, SEQ_N_current>SEQ_N_max; or if SEQ_N_current>SEQ_N_max is invalid, it is determined that the service data carried in the second packet is repeatedly transmitted, and the data packet is discarded.

(3) Solve the authentication identifier field in the second packet and the identity authentication key of the terminal device by using the second algorithm, to obtain a second authentication code field; and verify, by using the second authentication code field, whether the authentication code field in the second packet is valid. If it is verified, by using the second authentication code field, that the authentication code field in the second packet is valid, the maximum value of the sequence number of the second device is updated to the current value of the sequence number of the second device. Calculation of the authentication code by using sIDKey and AuthFlag based on the HMAC-SHA256 algorithm is as follows:

$$AuthCode'=MAC(sIDKey, DA\|SA\|KeyID\|SEQ\_N\_current\|Data)$$

The terminal device checks whether AuthCode'==AuthCode (the authentication code field in the second packet) is valid. If AuthCode'==AuthCode is invalid, it is considered that AuthCode is invalid and the data packet is discarded. Otherwise, it is considered that AuthCode is valid. SEQ_N_max is updated to SEQ N current.

In this application, the authentication identifier field and the authentication code field are introduced during packet transmission, so that the IoT device or the terminal device is more secure when accessing the network, and authentication efficiency is significantly improved. For example, an intelligent door lock obtains an identity authentication key and an identity after registering with and accessing the network. A user may use a numeric password, a fingerprint, an iris, or the like as a password of the intelligent door lock. The password may be bound to the identity authentication key of the intelligent door lock. After the user enters the password, the intelligent door lock generates an authentication code field based on packet fields sLoc, dLoc, ServiceID, ProfileID, AuthFlag, KeyID, SEQ_T_current, AuthCode, and Data of the intelligent door lock, and verifies correctness of the authentication code by using the aggregation device (that is, the second authentication device). If the authentication code is correct, unlocking is performed, or if the authentication code is incorrect, unlocking is rejected. In addition, when there is a visitor at home, the intelligent door lock may generate a temporary password. After obtaining the temporary password, a lawbreaker may directly enter the temporary password to the intelligent door lock. However, during packet transmission in this application, a SEQ is set for preventing a replay attack. After the temporary password is successfully verified and unlocking is performed once, if the lawbreaker enters the temporary password, verification fails and unlocking cannot be performed. The SEQ is accumulated once after unlocking is successfully performed once, but if the lawbreaker uses the same temporary password to unlock, the SEQ does not increase, and therefore the requirement $SEQ\_T\_max < SEQ\_T\_current \leq SEQ\_T\_max + SEQ\_WINDOW\_SIZE$ is not met. Therefore, the lawbreaker cannot perform unlocking successfully. During packet transmission in this application, only the authentication identifier field needs to be carried for identity authentication of the device, and the device identity does not need to be authenticated by using a control plane protocol, and device identity authentication efficiency is high. When device identity authentication efficiency is improved, packet processing efficiency is also correspondingly improved.

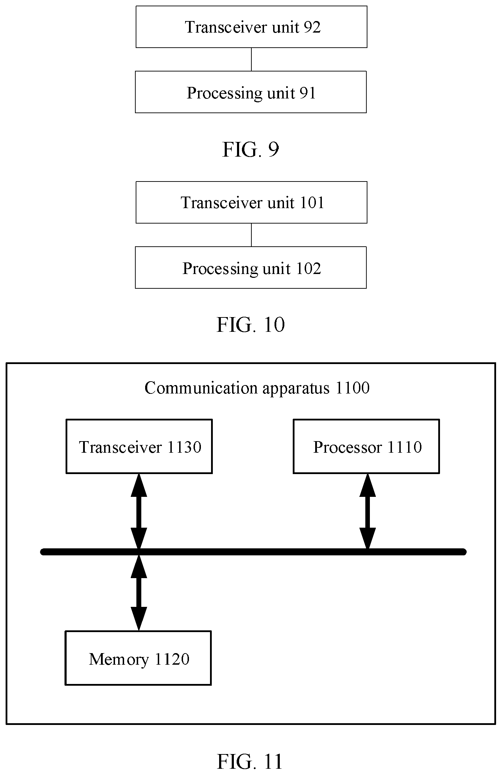

FIG. 9 shows a packet transmission apparatus according to this application. The apparatus includes a processing unit 91 and a transceiver unit 92.

The processing unit 91 is configured to determine a first packet, where a packet field of the first packet includes an authentication identifier field, an authentication code field, and at least one candidate authentication field, and the authentication identifier field indicates a field that is in the at least one candidate authentication field and that corresponds to the authentication code field. The transceiver unit 92 is configured to send the first packet.

It should be noted that, the authentication code field is an authentication code field obtained by performing data processing on one or more fields in the candidate authentication field and another field in the first packet. During uplink transmission of a packet, the first packet includes the authentication identifier field and the authentication code field, so that an authentication device authenticates an identity of the device by using the authentication identifier field and the authentication code field. During packet transmission in this application, the device identity does not need to be authenticated by using a control plane protocol, and device identity authentication efficiency is high. When device identity authentication efficiency is improved, packet processing efficiency is also correspondingly improved.

In an optional implementation, different types of packet transmission apparatuses correspond to different authentication identifier fields.

It should be noted that, that different types of first devices correspond to different authentication identifier fields may be understood as that authentication identifier fields corresponding to different first devices are different. For example, when the first device is an intelligent door lock and when the first device is an intelligent water meter, the corresponding authentication identifier fields are different. It may also be understood that authentication identifier fields corresponding to a same first device at different times are different. For example, an authentication identifier field of an intelligent door lock 1 in March 2021 is A, and an authentication identifier field of the intelligent door lock 1 in April 2021 is B. It may also be understood that authentication identifier fields corresponding to a same first device at different positions are different. For example, a working campus includes an office area and a living area, an authentication identifier field of a floor-scanning robot A in the office area is C, and an authentication identifier field of the floor-scanning robot A in the living area is D. In addition, another case in which authentication identifier fields corresponding to different types of first devices are different may be further involved. This is not specifically limited in this application. In this application, different types of first devices correspond to different authentication identifier fields, so that network security can be ensured, and validity of a device identity in a network can be ensured to the greatest extent.

In an optional implementation, the authentication identifier field indicates, by using a preset value, whether a field in the candidate authentication field is used to generate the authentication code field. It should be noted that, because the authentication identifier field may be identified by using the preset value, the authentication identifier field may indicate whether the candidate authentication field participates in calculation of the authentication code field.

In an optional implementation, a plurality of preset values are included, and a value of the preset value is a first value or a second value, where the first value indicates to generate the authentication code field by using the field in the candidate authentication field, and the second value indicates not to generate the authentication code field by using the field in the candidate authentication field.

It should be noted that, the preset value usually includes 1 or 0. 1 (a first preset value) indicates to use the corresponding packet field to generate the authentication code field, and 0 (a second preset value) indicates not to use the corresponding packet field to generate the authentication code field. However, in actual application, values of the first preset value and the second preset value are not limited, provided that the two values are different and indicate different meanings.

In an optional implementation, the first packet further includes a sequence number, and the sequence number indicates a sequence of service data. It should be noted that, the packet may be repeatedly sent. To determine whether the packet is repeatedly transmitted, the sequence number may indicate a transmission sequence of the service data in the packet, to avoid repeated transmission of the service data.

In an optional implementation, a verification node of the sequence number is a first authentication device, a verification node of the authentication code field is a second authentication device, and the first authentication device is different from the second authentication device. The sequence number and the authentication code field are separately verified by using different devices, so that statelessness of the second authentication device can be ensured, that is, the second authentication device may not need to maintain a state of the terminal device, to improve packet forwarding efficiency of the second device.

In an optional implementation, the packet transmission apparatus is the terminal device or the first authentication device. The terminal device may be an Internet of Things device, for example, an intelligent door lock or an intelligent water meter. The first authentication device may be a network device that directly communicates with the terminal device, for example, an access network device or an AP.

In an optional implementation, the packet transmission apparatus is the terminal device, and the candidate authentication field includes one or more of the following:

packet protocol indication information, a configuration information identifier, an identifier ID of a master key, a current value of the sequence number, and the service data of the terminal device, where
the packet protocol indication information indicates a communication protocol used for data exchange between the terminal device and a second device; the configuration information identifier indicates an algorithm used for generating an identity authentication key of the terminal device and an algorithm used for generating the authentication code field; and the ID of the master key is an identifier of a key used for generating the identity authentication key of the terminal device.

It should be noted that, the second device is a device that exchanges data with the terminal device, and may be an application server or another device. This is not specifically limited herein in this application. It is usually assumed that an identity of the second device is trusted, and the identity of the second device does not need to be verified. A communication protocol used for data exchange between the terminal device and the second device may be an associated authentication protocol, or may be another communication protocol. This is not specifically limited in this application. In addition, the identity key of the terminal device is usually generated by an authentication server based on the master key. However, the authentication server may usually support a plurality of different types of master keys, and a master key that is used to generate the identity authentication key of the terminal device needs to be identified by using the ID. In addition, the candidate authentication field includes the configuration identifier information, so that the second authentication device obtains a corresponding authentication identifier field through solving based on an algorithm indicated by the configuration identifier information, and verifies, based on the authentication identifier field obtained through solving, whether the authentication identifier field in the packet is correct.

In an optional implementation, the first packet is an uplink packet.

In an optional implementation, if the packet transmission apparatus is the first authentication device, the processing unit 91 is further configured to: set a sequence number window value, and create a terminal device information table, where the terminal device information table includes address information of the terminal device and a maximum value of the sequence number of the terminal device; and verify the current value of the sequence number in the packet of the terminal device based on the sequence number window value and the maximum value of the sequence number of the terminal device, to determine whether the service data is repeatedly transmitted.

In this application, the first authentication device verifies the current value of the sequence number by using the sequence number window value and the maximum value of the sequence number in the terminal device information table, to determine whether the service data carried in the packet sent by the terminal device is repeatedly transmitted. In this manner, a replay attack can be prevented.

In an optional implementation, the processing unit 91 is further configured to: if it is determined, based on the terminal device information table, the sequence number window value, and the current value of the sequence number in the first packet, that the service data in the first packet is repeatedly transmitted, send the maximum value of the sequence number of the terminal device in the terminal device information table to the terminal device.

In an optional implementation, the processing unit 91 is further configured to: if it is determined, based on the terminal device information table, the sequence number window value, and the current value of the sequence number in the first packet, that the service data in the first packet is not repeatedly transmitted, update the maximum value of the sequence number of the terminal device in the terminal device information table to the current value of the sequence number.

In an optional implementation, the terminal device information table further includes an ID of the terminal device. If the packet transmission apparatus is the first authentication device, the processing unit 91 is further configured to: receive the packet of the terminal device, where the packet of the terminal device includes a first authentication identifier field; and modify the first authentication identifier field based on the ID of the terminal device, to obtain the authentication identifier field.

In an optional implementation, the terminal device information table further includes an ID of the terminal device. If the packet transmission apparatus is the first authentication device, the processing unit 91 is further configured to: receive the packet of the terminal device; determine the authentication identifier field based on the candidate authentication field, the address information of the terminal device, the ID of the terminal device, and the address information of the second device, where there is data exchange between the second device and the terminal device; and add the authentication identifier field to the packet of the terminal device, to obtain the first packet.

In an optional implementation, if the packet transmission apparatus is the second authentication device, the transceiver unit 92 is further configured to receive the packet from the first authentication device. The packet of the first authentication device includes the ID of the terminal device and an authentication code field. The processing unit 91 is further configured to: determine the first key based on the master key information and the ID of the terminal device, and verify validity of the authentication code field based on the first key, where the master key information includes the ID of the master key and a value of the master key, and if it is determined, based on the first key, that the authentication code field is valid, send the packet of the first authentication device to the second device.

In an optional implementation, the candidate authentication field includes the packet protocol indication information, the configuration information identifier, the ID of the master key, the current value of the sequence number, and the service data of the terminal device. The processing unit 91 is further configured to: solve the identity authentication key of the terminal device based on the configuration information identifier and the master key information, and then determine the first authentication identifier field based on the solved identity authentication key of the terminal device and the at least one candidate authentication field; and determine, by comparing the first authentication identifier field with the authentication identifier field in the packet of the first authentication device, whether to send the packet of the first authentication device to the second device.

In an optional implementation, the candidate authentication field includes the packet protocol indication information, the configuration information identifier, the ID of the master key, the current value of the sequence number, and the service data of the terminal device. The processing unit 91 is further configured to: determine, based on the configuration information identifier in the packet of the first authentication device, that the identity authentication key of the terminal device is generated by using a first algorithm and the authentication code field in the packet of the first authentication device is generated by using a second algorithm; solve the ID of the terminal device and the master key information by using the first algorithm, to determine the identity authentication key of the terminal device; and solve the authentication identifier field of the terminal device and the identity authentication key of the terminal device by using the second algorithm, to obtain the first authentication code field; and if the first authentication code field is consistent with the authentication code field in the packet of the first authentication device, send the packet of the first authentication device to the second device.

In an optional implementation, the processing unit 91 is further configured to maintain a terminal context table, where the terminal context table includes the ID of the terminal device, the address information of the terminal device, the configuration information identifier, and the ID of the master key.

This application further provides another packet transmission apparatus, as shown in FIG. 10, including a transceiver unit 101 and a processing unit 102.

The transceiver unit 101 is configured to receive a second packet from a second authentication device, where a packet field of the second packet includes an authentication identifier field, an authentication code field, and at least one candidate authentication field, and the authentication identifier field indicates a field that is in the at least one candidate authentication field and that corresponds to the authentication code field. The processing unit 102 is configured to verify the authentication code field of the second packet.

It should be noted that, the authentication code field is an authentication code field obtained by performing data processing on one or more fields in the candidate authentication field and another field in the first packet. During downlink transmission of a packet, the first packet includes the authentication identifier field and the authentication code field, so that an authentication device authenticates an identity of the device by using the authentication identifier field and the authentication code field. During packet transmission in this application, the device identity does not need to be authenticated by using a control plane protocol, and device identity authentication efficiency is high. When device identity authentication efficiency is improved, packet processing efficiency is also correspondingly improved.

In an optional implementation, the authentication identifier field indicates, by using a preset value, whether a field in the candidate authentication field is used to generate the authentication code field. It should be noted that, because the authentication identifier field may be identified by using the preset value, the authentication identifier field may indicate whether the candidate authentication field participates in calculation of the authentication code field.

In an optional implementation, a plurality of preset values are included, and a value of the preset value is a first value or a second value, where the first value indicates to generate the authentication code field by using the field in the candidate authentication field, and the second value indicates not to generate the authentication code field by using the field in the candidate authentication field.

It should be noted that, the preset value usually includes 1 or 0. 1 (a first preset value) indicates to use the corresponding packet field to generate the authentication code field, and 0 (a second preset value) indicates not to use the corresponding packet field to generate the authentication code field. However, in actual application, values of the first preset value and the second preset value are not limited, provided that the two values are different and indicate different meanings.

In an optional implementation, the second packet further includes a sequence number of a second device, the sequence number of the second device indicates a sequence of service data of the second device, and there is data exchange between the second device and the terminal device.

In an optional implementation, the sequence number of the second device is determined by using a timestamp. It should be noted that, the second authentication device has a strong data processing capability, and is provided with a time synchronization module. Therefore, the sequence number of the second device is usually determined based on the timestamp.

In an optional implementation, the candidate authentication field includes one or more of the following: packet protocol indication information, a configuration information identifier, an identifier ID of a master key, a current value of the sequence number, and the service data of the second device, where the packet protocol indication information indicates a communication protocol used for data exchange between the terminal device and the second device; the configuration information identifier indicates an algorithm used for generating an identity authentication key of the terminal device and an algorithm used for generating the authentication code field; and the ID of the master key is an identifier of a key used for generating the identity authentication key of the terminal device.

In an optional implementation, the candidate authentication field includes the packet protocol indication information, the configuration information identifier, the ID of the master key, the current value of the sequence number, and the service data of the terminal device. The processing unit 102 is further configured to: solve the identity authentication key of the terminal device based on the configuration information identifier and the master key information, and then determine the second authentication identifier field based on the solved identity authentication key of the terminal device and the at least one candidate authentication field; and determine, by comparing the second authentication identifier field with the authentication identifier field in the packet of the second authentication device, whether to receive the packet of the second authentication device.

In an optional implementation, the processing unit 102 is further configured to: determine, based on the configuration information identifier in the second packet, that the identity authentication key of the terminal device is generated by using a first algorithm and the authentication code field in the second packet is generated by using a second algorithm; determine that the service data carried in the second packet is not repeatedly transmitted if a maximum value of the sequence number of the second device is less than the current value that is of the sequence number of the second device and that is in the second packet; solve the authentication identifier field in the second packet and the identity authentication key of the terminal device by using the second algorithm, to obtain a second authentication code field; and verify, by using the second authentication code field, whether the authentication code field in the second packet is valid.

In an optional implementation, the processing unit 102 is further configured to: if it is verified, by using the second authentication code field, that the authentication code field in the second packet is valid, update the maximum value of the sequence number of the second device to the current value of the sequence number of the second device.

In an optional implementation, the second packet of the second authentication device is determined by performing data processing on the packet protocol indication information, the configuration information identifier, the authentication identifier field, the ID of the master key, the current value of the sequence number of the second device, and the service data of the second device. There is data exchange between the second device and the terminal device. The packet protocol indication information indicates a communication protocol used for data exchange between the terminal device and the second device. The configuration information identifier indicates an algorithm used for generating an identity authentication key of the terminal device and an algorithm used for generating the authentication code field. The ID of the master key is an identifier of a key used for generating the identity authentication key of the terminal device.

In addition, FIG. 11 shows a communication apparatus 1100 according to this application. For example, the communication apparatus 1100 may be a chip or a chip system. Optionally, in this embodiment of this application, the chip system may include a chip, or may include the chip and another discrete component.

The communication apparatus 1100 may include at least one processor 1110, and the communication apparatus 1100 may further include at least one memory 1120, configured to store a computer program, a program instruction, and/or data. The memory 1120 is coupled to the processor 1110. The coupling in this embodiment of this application may be an indirect coupling or a communication connection between apparatuses, units, or modules in an electrical form, a mechanical form, or another form, and is used for information exchange between the apparatuses, the units, or the modules. The processor 1110 may cooperate with the memory 1120. The processor 1110 may execute the computer program stored in the memory 1120. Optionally, the at least one memory 1120 may alternatively be integrated with the processor 1110.

The communication apparatus 1100 may further include a transceiver 1130, and the communication apparatus 1100 may exchange information with another device by using the transceiver 1130. The transceiver 1130 may be a circuit, a bus, a transceiver, or any other apparatus that may be configured to exchange information.

In a possible implementation, the communication apparatus 1100 may be applied to the foregoing terminal device, or may be the foregoing first authentication device, the foregoing second authentication device, or the foregoing second device. The memory 1120 stores a necessary computer program, program instruction, and/or data for implementing a function of the device in any one of the foregoing embodiments. The processor 1110 may execute the computer program stored in the memory 1120, to complete the method in any one of the foregoing embodiments.

A specific connection medium between the transceiver 1130, the processor 1110, and the memory 1120 is not limited in this embodiment of this application. In this embodiment of this application, the memory 1120, the processor 1110, and the transceiver 1130 are connected by using a bus in FIG. 11. The bus is represented by a bold line in FIG. 11. A manner of connection between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus. In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory may alternatively be any other medium that can be configured to carry or store expected program code in a form of an instruction or a data structure and that can be accessed by a computer. This is not limited thereto. The memory in embodiments of this application may alternatively be a circuit or any other apparatus that can implement a storage function, and is configured to store the computer program, the program instruction, and/or the data.

Based on the foregoing embodiments, an embodiment of this application further provides a readable storage medium. The readable storage medium stores instructions. When the instructions are executed, the packet transmission method in any one of the foregoing embodiments is implemented. The readable storage medium may include any medium that can store program code, for example, a USB flash drive, a removable hard disk, a read-only memory, a random-access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing apparatus to generate a machine, so that the instructions executed by the computer or the processor of the another programmable data processing apparatus generate an apparatus for implementing a function specified in one or more processes in the flowcharts and/or in one or more blocks in the block diagrams.

These computer program instructions may alternatively be stored in a computer-readable memory that can instruct a computer or another programmable data processing apparatus to work in a specific manner, so that the instructions stored in the computer-readable memory generate an artifact that includes an instruction apparatus. The instruction apparatus implements a function specified in one or more processes in the flowcharts and/or in one or more blocks in the block diagrams.

These computer program instructions may alternatively be loaded onto a computer or another programmable data processing apparatus, so that a series of operations and steps are performed on the computer or the another programmable apparatus, to generate computer-implemented processing. Therefore, the instructions executed on the computer or the another programmable apparatus provide steps for implementing a function specified in one or more processes in the flowcharts and/or in one or more blocks in the block diagrams.

**Claims**

1.    A packet transmission method, applied to a first device, comprising:

   determining a first packet, wherein a packet field of the first packet comprises an authentication identifier field, an authentication code field, and at least one candidate authentication field, and the authentication identifier field indicates a field that is in the at least one candidate authentication field and that corresponds to the authentication code field; and
   sending the first packet.

2.    The method according to claim 1, wherein different types of first devices correspond to different authentication identifier fields.

3.    The method according to claim 1 or 2, wherein the authentication identifier field indicates, by using a preset value, whether a field in the candidate authentication field is used to generate the authentication code field.

4.    The method according to claim 3, wherein a plurality of preset values are comprised, and a value of the preset value is a first value or a second value, wherein
   the first value indicates to generate the authentication code field by using the field in the candidate authentication field, and the second value indicates not to generate the authentication code field by using the field in the candidate authentication field.

5.    The method according to any one of claims 1 to 4, wherein the first packet further comprises a sequence number of a terminal device, and the sequence number of the terminal device indicates a sequence of service data of the terminal device.

6.    The method according to claim 5, wherein a verification node of the sequence number is a first authentication device, a verification node of the authentication code field is a second authentication device, and the first authentication device is different from the second authentication device.

7.    The method according to any one of claims 1 to 6, wherein the first device is the terminal device or the first authentication device.

8.    The method according to claim 7, wherein the first device is the terminal device, and the candidate authentication field comprises one or more of the following:

   packet protocol indication information, a configuration information identifier, an identifier ID of a master key, a current value of the sequence number, and the service data of the terminal device, wherein
   the packet protocol indication information indicates a communication protocol used for data exchange between the terminal device and a second device; the configuration information identifier indicates an algorithm used for generating an identity authentication key of the terminal device and an algorithm used for generating the authentication code field; and the ID of the master key is an identifier of a key used for generating the identity authentication key of the terminal device.

9.    The method according to any one of claims 1 to 8, wherein the first packet is an uplink packet.

10. A packet transmission method, applied to a terminal device, comprising:

   receiving a second packet from a second authentication device, wherein a packet field of the second packet comprises an authentication identifier field, an authentication code field, and at least one candidate authentication field, and the authentication identifier field indicates a field that is in the at least one candidate authentication field and that corresponds to the authentication code field; and
   verifying the authentication code field of the second packet.

11. The method according to claim 10, wherein the authentication identifier field indicates, by using a preset value, whether a field in the candidate authentication field is used to generate the authentication code field.

12. The method according to claim 11, wherein a plurality of preset values are comprised, and a value of the preset value is a first value or a second value, wherein
   the first value indicates to generate the authentication code field by using the field in the candidate authentication field, and the second value indicates not to generate the authentication code field by using the field in the candidate authentication field.

13. The method according to any one of claims 10 to 12, wherein the second packet further comprises a sequence number of a second device, the sequence number of the second device indicates a sequence of service data of the second device, and there is data exchange between the second device and the terminal device.

14. The method according to claim 13, wherein the sequence number of the second device is determined by using a timestamp.

15. The method according to any one of claims 10 to 14, wherein the candidate authentication field comprises one or more of the following:

   packet protocol indication information, a configuration information identifier, an identifier ID of a master key, a current value of the sequence number, and the service data of the second device, wherein
   the packet protocol indication information indicates a communication protocol used for data exchange between the terminal device and the second device; the configuration information identifier indicates an algorithm used for generating an identity authentication key of the terminal device and an algorithm used for generating the authentication code field; and the ID of the master key is an identifier of a key used for generating the identity authentication key of the terminal device.

16. The method according to any one of claims 10 to 15, wherein the second packet is a downlink packet.

17. A packet transmission apparatus, comprising:

   a processing unit, configured to determine a first packet, wherein a packet field of the first packet comprises an authentication identifier field, an authentication code field, and at least one candidate authentication field, and the authentication identifier field indicates a field that is in the at least one candidate authentication field and that corresponds to the authentication code field; and
   a transceiver unit, configured to send the first packet.

18. The apparatus according to claim 17, wherein different types of packet transmission apparatuses correspond to different authentication identifier fields.

19. The apparatus according to claim 17 or 18, wherein the authentication identifier field indicates, by using a preset value, whether a field in the candidate authentication field is used to generate the authentication code field.

20. The apparatus according to claim 19, wherein a plurality of preset values are comprised, and a value of the preset value is a first value or a second value, wherein
   the first value indicates to generate the authentication code field by using the field in the candidate authentication field, and the second value indicates not to generate the authentication code field by using the field in the candidate authentication field.

21. The apparatus according to any one of claims 17 to 20, wherein the first packet further comprises a sequence number of a terminal device, and the sequence number of the terminal device indicates a sequence of service data of the terminal device.

22. The apparatus according to claim 21, wherein a verification node of the sequence number is a first authentication device, a verification node of the authentication code field is a second authentication device, and the first authentication device is different from the second authentication device.

23. The apparatus according to any one of claims 17 to 22, wherein the packet transmission apparatus is the terminal device or the first authentication device.

24. The apparatus according to claim 23, wherein the packet transmission apparatus is the terminal device, and the candidate authentication field comprises one or more of the following:

packet protocol indication information, a configuration information identifier, an identifier ID of a master key, a current value of the sequence number, and the service data of the terminal device, wherein the packet protocol indication information indicates a communication protocol used for data exchange between the terminal device and a second device; the configuration information identifier indicates an algorithm used for generating an identity authentication key of the terminal device and an algorithm used for generating the authentication code field; and the ID of the master key is an identifier of a key used for generating the identity authentication key of the terminal device.

25. The apparatus according to any one of claims 17 to 24, wherein the first packet is an uplink packet.

26. A packet transmission apparatus, comprising:

a transceiver unit, configured to receive a second packet from a second authentication device, wherein a packet field of the second packet comprises an authentication identifier field, an authentication code field, and at least one candidate authentication field, and the authentication identifier field indicates a field that is in the at least one candidate authentication field and that corresponds to the authentication code field; and a processing unit, configured to verify the authentication code field of the second packet.

27. The apparatus according to claim 26, wherein the authentication identifier field indicates, by using a preset value, whether a field in the candidate authentication field is used to generate the authentication code field.

28. The apparatus according to claim 27, wherein a plurality of preset values are comprised, and a value of the preset value is a first value or a second value, wherein the first value indicates to generate the authentication code field by using the field in the candidate authentication field, and the second value indicates not to generate the authentication code field by using the field in the candidate authentication field.

29. The apparatus according to any one of claims 26 to 28, wherein the second packet further comprises a sequence number of a second device, the sequence number of the second device indicates a sequence of service data of the second device, and there is data exchange between the second device and the terminal device.

30. The apparatus according to claim 29, wherein the sequence number of the second device is determined by using a timestamp.

31. The apparatus according to any one of claims 26 to 30, wherein the candidate authentication field comprises one or more of the following:

packet protocol indication information, a configuration information identifier, an identifier ID of a master key, a current value of the sequence number, and the service data of the second device, wherein the packet protocol indication information indicates a communication protocol used for data exchange between the terminal device and the second device; the configuration information identifier indicates an algorithm used for generating an identity authentication key of the terminal device and an algorithm used for generating the authentication code field; and the ID of the master key is an identifier of a key used for generating the identity authentication key of the terminal device.

**32.** The apparatus according to any one of claims 26 to 31, wherein the second packet is a downlink packet.

**33.** A communication apparatus, comprising at least one processor and a memory, wherein

the memory is configured to store a computer program or instruction; and
the at least one processor is configured to execute the computer program or instruction stored in the memory, so that the communication apparatus performs the method according to any one of claims 1 to 9 or the method according to any one of claims 10 to 16.

**34.** A computer-readable storage medium, wherein the computer-readable storage medium stores instructions, and when the instructions are executed, a computer is enabled to perform the method according to any one of claims 1 to 9 or the method according to any one of claims 10 to 16.

FIG. 1

Terminal
device 202

**Communication system 200**

Access
device 203

Aggregation
device 204

Application
server 205

IoT device
201

FIG. 2

| Terminal device | First authentication device | Second authentication device | Second device |
|---|---|---|---|

Step 301: Send a packet of the terminal device

Step 302: Perform data processing on the packet from the terminal device, to obtain a packet of the first authentication device

Step 303: Send the packet of the first authentication device

Step 304: Verify an identity of the terminal device based on an authentication identifier field in the packet of the first authentication device

Invalid

Valid

Step 305: Discard service data in the packet of the first authentication device

Step 306: Forward the service data in the packet of the first authentication device to the second device

FIG. 3

| Device i | | Registration server |
|---|---|---|

$sID_i$    $IDKey_i$    KeyID

SEQ_T    SEQ_Nmax

FIG. 4

EP 4 325 812 A1

| Terminal device | First authentication device | Second authentication device | Second device |
|---|---|---|---|

SA=sLoc DA=dLoc SEQ_T++
AuthCode=MAC(sIDKey,
DA‖SA‖KeyID‖SEQ_T_current‖
Data(data))

| DA, SA, ServiceID, ProfileID, AuthFlag, KeyID, SEQ_T_current, AuthCode | Data (data) |
|---|---|

Verify whether SEQ_T_current meets
SEQ_T_max<SEQ_T_current
SEQ_T_max+SEQ_WINDOW _SIZE

| DA, SA, ServiceID, ProfileID, AuthFlag, KeyID, SEQ_T_current, AuthCode, sID | Data (data) |
|---|---|

Verify AuthCode

| DA, SA | Data (data) |
|---|---|

FIG. 5

Terminal device

First authentication device

SA=sLoc
DA=dLoc
SEQ_T++
AuthCode=MAC(sIDKey,
DA||SA||KeyID||SEQ_T_current||Data(data))

| DA, SA, ServiceID, ProfileID, AuthFlag, KeyID, SEQ_T_current, AuthCode | Data (data) |
|---|---|

Verify whether SEQ_T_current meets
SEQ_T_max<SEQ_T_current
SEQ_T_max
+SEQ_WINDOW_SIZE
The requirement is not met

Return SEQ_Failure and SEQ_T_max

FIG. 6

Terminal device

First authentication device

Second authentication device

Second device

Step 701: Send a packet

Step 702: Determine a second packet by performing data processing on packet protocol indication information, a configuration information identifier, an authentication identifier field, an ID of a master key, a current value of a sequence number of the second device, and service data of the second device

Step 703: Send the second packet

Step 704: Send the second packet

Step 705: Verify an authentication code field of the second packet

FIG. 7

EP 4 325 812 A1

| Terminal device | First authentication device | Second authentication device | Second device |
|---|---|---|---|

| DA, SA | Data (data) |
|---|---|

Add packet fields

| DA, SA, ServiceID, ProfileID, AuthFlag, KeyID, SEQ_N_current, AuthCode, sID | Data (data) |
|---|---|

| DA, SA, ServiceID, ProfileID, AuthFlag, KeyID, SEQ_N_current, AuthCode | Data (data) |
|---|---|

Verify SEQ_N_current and AuthCode

FIG. 8

Transceiver unit 92

Processing unit 91

FIG. 9

Transceiver unit 101

Processing unit 102

FIG. 10

Communication apparatus 1100

Transceiver 1130

Processor 1110

Memory 1120

FIG. 11

## INTERNATIONAL SEARCH REPORT

| International application No. |
|---|
| **PCT/CN2022/092020** |

**A. CLASSIFICATION OF SUBJECT MATTER**

H04L 67/12(2022.01)i; H04L 69/06(2022.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; VEN; CNKI; ENTXTC; IEEE Xplore: 接入认证, 认证码, 备选, 候选, 字段, 参数, 向量, 参与, 内生安全, 随路, 智能锁, 物联网, 对称加密, 比特, IOT, authentication, AuthCode, Flag, bitmap, MAC, srcLoc, Flex IP, intrinsic security

**C. DOCUMENTS CONSIDERED TO BE RELEVANT**

| Category* | Citation of document, with indication, where appropriate, of the relevant passages | Relevant to claim No. |
|---|---|---|
| A | CN 112311533 A (CHINA TELECOM CORPORATION LIMITED) 02 February 2021 (2021-02-02) description, paragraphs [0031]-[0052] | 1-34 |
| A | CN 1585379 A (HUAZHONG UNIVERSITY OF SCIENCE AND TECHNOLOGY) 23 February 2005 (2005-02-23) entire document | 1-34 |
| A | CN 108881037 A (CENTEC NETWORKS (SUZHOU) CO., LTD.) 23 November 2018 (2018-11-23) entire document | 1-34 |
| A | CN 110234112 A (HUAWEI TECHNOLOGIES CO., LTD.) 13 September 2019 (2019-09-13) entire document | 1-34 |
| A | 江伟玉 等 (JIANG, Weiyu et al.). "内生安全网络架构 (Network Architecture With Intrinsic Security)" 电信科学 (Telecommunications Science), No. 9, 30 September 2019 (2019-09-30), pp. 20-28 | 1-34 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 July 2022** | **22 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/092020** |

**C.    DOCUMENTS CONSIDERED TO BE RELEVANT**

| Category* | Citation of document, with indication, where appropriate, of the relevant passages | Relevant to claim No. |
|---|---|---|
| A | 中国信通院 (China Academy of Information and Communications Technology). "中国信通院联合华为完成全球首个面向节能可信互联园区场景的Flex IP技术试验 (Non-official translation: CAICT and Huawei Completing the World's First Flex Ip Technology Trial for Energy-efficient and Trusted Interconnected Campus Scenarios)" 《网络新媒体技术》 *(Non-official translation: Network New Media Technology)*, No. 2, 30 April 2021 (2021-04-30), entire document | 1-34 |

Form PCT/ISA/210 (second sheet) (January 2015)

**INTERNATIONAL SEARCH REPORT**
Information on patent family members

International application No.

**PCT/CN2022/092020**

| Patent document cited in search report | | | Publication date (day/month/year) | Patent family member(s) | | | Publication date (day/month/year) |
|---|---|---|---|---|---|---|---|
| CN | 112311533 | A | 02 February 2021 | None | | | |
| CN | 1585379 | A | 23 February 2005 | None | | | |
| CN | 108881037 | A | 23 November 2018 | None | | | |
| CN | 110234112 | A | 13 September 2019 | EP | 3755024 | A1 | 23 December 2020 |
| | | | | WO | 2019170047 | A1 | 12 September 2019 |
| | | | | US | 2020404497 | A1 | 24 December 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110524375